# EUROPÄISCHE PATENTSCHRIFT

(11) **EP 3 152 019 B1**
(45) Veröffentlichungstag und Bekanntmachung des Hinweises auf die Patenterteilung: **22.11.2017**
(21) Anmeldenummer: 16736095.7
(22) Anmeldetag: 05.07.2016
(51) Int. Cl.: B27K 3/34, B27K 3/50, C09D 5/02, C09D 15/00, C09D 191/06, C08L 97/00

(54) **GEBROCHENE DISPERSION ZUR HYDROPHOBIERUNG VON LIGNOCELLULOSEHALTIGEM MATERIAL**
BROKEN DISPERSION FOR HYDROPHOBIZING LIGNOCELLULOSIC MATERIAL
DISPERSION BRISÉE PERMETTANT L'HYDROFUGATION D'UN MATÉRIAU CONTENANT DE LA LIGNOCELLULOSE

(30) Priorität: 19.08.2015 DE 102015113775
(43) Veröffentlichungstag der Anmeldung: 12.04.2017
(73) Patentinhaber: Fritz Egger GmbH & Co. OG, 6380 St. Johann in Tirol (AT)
(72) Erfinder: KUNCINGER, Thomas, 1200 Wien (AT)
(74) Vertreter: Cohausz & Florack
(86) Internationale Anmeldenummer: PCT/EP2016/065854
(87) Internationale Veröffentlichungsnummer: WO 2017/029016

(56) Entgegenhaltungen:
- EP-A1- 2 158 271
- DE-A1- 19 652 849
- DE-A1-102006 019 818
- US-A1- 2007 059 509

## Beschreibung

Die Erfindung betrifft eine gebrochene Dispersion zur Hydrophobierung von lignocellulosehaltigem Material, ein Verfahren zur Herstellung von hydrophobierten Holzwerkstoffen sowie daraus erhältliche hydrophobierte Holzwerkstoffe. Die Erfindung betrifft weiterhin die Verwendung einer gebrochener Dispersion zur Hydrophobierung eines lignocellulosehaltigen Materials und/oder eines Bindemittels, die Verwendung einer polyfunktionalen Verbindung als Demulgator zum Brechen einer Dispersion sowie ein Zweikomponentensystem enthaltend eine Dispersion und einen Demulgator zur Hydrophobierung von lignocellulosehaltigem Material und/oder Bindemitteln.

Die Beständigkeit von Holzwerkstoffen gegenüber Wasser und Umgebungsfeuchte wird maßgeblich durch die Quellungseigenschaften des darin enthaltenen lignocellulosehaltigen Materials bestimmt. Aufgrund von solcher Wasseraufnahme, Quellung und damit verbundener Dimensionsänderung kann es zu Problemen sowohl bei der Verarbeitung, als auch beim täglichen Gebrauch kommen. Grundsätzlich ist es daher erwünscht, die Wasseraufnahme und Quellung von Holzwerkstoffen zu reduzieren. Daneben sollen Holzwerkstoffe eine hohe Biege- und Querzugfestigkeit und damit eine ausreichende Elastizität und Stabilität besitzen. Die Anforderungen zur Bestimmung dieser Parameter finden sich in unterschiedlichsten europäischen Normen, beispielsweise in DIN EN 312 (Anforderungen an Spanplatten), EN 622 (Anforderungen an Faserplatten), DIN EN 319 (Spanplatten und Faserplatten; Bestimmung der Zugfestigkeit senkrecht zur Plattenebene) und DIN EN 317 (Spanplatten und Faserplatten; Bestimmung der Dickenquellung nach Wasserlagerung).

Insbesondere müssen Spanplatten oder Faserplatten, die als Trägerplatten in Laminatfußböden eingesetzt werden, hohe Anforderungen bezüglich der Dickenquellung, Kantenquellung und Wasseraufnahme erfüllen. Um die geforderten Grenzwerte einzuhalten, werden Holzwerkstoffe oder das darin enthaltene lignocellulosehaltige Material beim Produktionsprozess oft mit Hydrophobierungsmitteln imprägniert und/oder beschichtet. Das Hydrophobierungsmittel soll dabei die Quellung und Wasseraufnahme reduzieren, wobei im Idealfall Produkteigenschaften wie die Biege- und Querzugfestigkeit nicht negativ beeinflusst werden.

Aus dem Stand der Technik sind verschiedene Hydrophobierungsarten zur Verminderung des Eindringens von Wasser in Holzwerkstoffe bekannt. Eine Option ist die chemische Umsetzung der in den Holzbestandteilen (Cellulose, Hemicellulosen, Lignin) enthaltenen OH-Gruppen, um den hydrophilen Charakter, insbesondere die Wasseraufnahmefähigkeit und Quellung, zu reduzieren. Bekannte Verfahren sind hier beispielsweise Acetylierung oder Silylierung der OH-Gruppen.

Darüber hinaus werden unterschiedlichste Imprägniermittel und/oder Beschichtungsmittel zur Hydrophobierung von Holzwerkstoffen in der holzverarbeitenden Industrie eingesetzt. Als kostengünstige Beschichtungsmittel und/oder Imprägniermittel werden typischerweise natürliche oder synthetische Wachse oder Mischungen daraus verwendet. In der Span- oder Faserplattenherstellung werden üblicherweise Paraffine, beispielsweise in fester bzw. geschmolzener Form oder als Paraffindispersion, eingesetzt. Vor allem der Einsatz von kommerziell erhältlichen Paraffindispersionen ist weit verbreitet. Diese Paraffindispersionen bestehen hauptsächlich aus Wasser und Paraffin bzw. Paraffinwachs und einem Emulgator. Der Emulgator verhindert die Entmischung der wässrigen und der paraffinhaltigen Phase und trägt damit entscheidend zur Stabilität und Lagerfähigkeit der Dispersion bei. Die Paraffindispersionen zur Hydrophobierung von lignocellulosehaltigem Material werden in der holzverarbeitenden Industrie nicht nur wegen ihrer guten Lagerfähigkeit, sondern auch wegen ihrer guten Dosierbarkeit und Verteilbarkeit eingesetzt. Die flüssige Form erlaubt sowohl ein einfaches Aufsprühen als auch eine gute Verteilung der Paraffindispersion selbst auf dem lignocellulosehaltigen Material. Jedoch hat die gute Verteilbarkeit den Nachteil, dass nach Auftragen des Hydrophobierungsmittels oftmals keine ausreichenden Bindestellen für das Bindemittel auf dem lignocellulosehaltigen Material verbleiben und dadurch nur eine unzureichende Benetzung mit dem Bindemittel stattfinden kann. Dies kann zu einer unzureichende Verleimung führen, was eine Verlängerung des Pressvorgangs und damit einhergehend eine Verschlechterung der mechanischen Eigenschaften zur Folge haben kann. Die mechanische Festigkeit kann ferner durch einen zu hohen Anteil von eingesetzter Paraffindispersion verschlechtert werden. Um eine ausreichende Festigkeit des Holzwerkstoffs zu gewährleisten, sollte die Konzentration der eingesetzten Paraffindispersion 2 Gew.% (fest/atro), bezogen auf das Gesamtgewicht des lignocellulosehaltigen Materials, nicht überschreiten.

In der Praxis kommen auch feste Paraffin zum Einsatz. Diese werden in aufgeschmolzener Form punktuell aufgetragen, wodurch Bindungsstellen für das Bindemittel auf dem lignocellulosehaltigen Material freibleiben. Diese punktuelle Auftragung kommt dadurch zustande, dass das feste Paraffin zuerst geschmolzen und dann flüssig in Form von Tröpfchen auf das lignocellulosehaltige Material aufgesprüht wird. Durch den Luftkontakt kühlen die flüssigen Paraffintröpfchen ab und liegen auf dem lignocellulosehaltigem Material letztendlich als erstarrte Tröpfchen vor. Beim Heißpressen zum Holzwerkstoff schmilzt das Paraffin wieder auf und verteilt sich gleichmäßig auf Holzwerkstoff und Bindemittel. Der Einsatz fester Paraffine hat jedoch den Nachteil, dass das Schmelzen mit einem erhöhten Energieaufwand und Brandrisiko einhergeht.

Ausgehend von dem vorstehend erläuterten Stand der Technik und dessen Nachteilen bestand eine Aufgabe der Erfindung darin, ein verbessertes Hydrophobierungsmittel und verbesserte Hydrophobierungsverfahren für lignocellulosehaltige Materialien bereitzustellen.

Diese Aufgabe wird erfindungsgemäß durch ein Verfahren zur Herstellung eines Holzwerkstoffs nach Anspruch 1, eine Verwendung nach Anspruch 2, einen Holzwerkstoff nach Anspruch 16, eine gebrochene Dispersion nach Anspruch 17, einer Verwendung gemäß Anspruch 18 sowie durch ein Zweikomponentensystem nach Anspruch 19 gelöst.

Vorteilhafte Ausführungsformen der Erfindung sind in den abhängigen Ansprüchen angegeben und werden nachfolgend, wie auch die Erfindung als solche, im Einzelnen erläutert.

Gegenstand der Erfindung ist eine gebrochene Dispersion zur Hydrophobierung von lignocellulosehaltigem Material, wobei die gebrochene Dispersion erhältlich ist durch Mischen von mindestens
A) einer wachshaltigen Dispersion enthaltend folgende Komponenten:
   i) mindestens eine wässrige Phase als kontinuierliche Phase,
   ii) mindestens eine disperse Phase enthaltend Wachs, und
   iii) mindestens einen Emulgator,
   mit
B) einem Demulgator mit mindestens einer funktionalen Gruppe.

Die gebrochene Dispersion kann optional weitere Komponenten, insbesondere Zusatzstoffe, enthalten.

Überraschenderweise wurde festgestellt, dass durch den Einsatz einer gebrochenen Dispersion anstelle der bekannten, intakten wachshaltigen Dispersionen, die oben aufgeführten, aus dem Stand der Technik bekannten Probleme weitestgehend vermieden oder reduziert werden können. In praktischen Versuchen hat sich nämlich gezeigt, dass die erfindungsgemäße gebrochene Dispersion die Vorteile von festen Paraffinen auf der einen Seite sowie der lagerstabilen Paraffindispersionen auf der anderen Seite vereint.

Die erfindungsgemäße gebrochene Dispersion unterscheidet sich von "konventionellen" wachshaltigen Dispersionen darin, dass die Dispersion gebrochen ist, das heißt keine homogene Dispersion mehr vorliegt. Dies wird dadurch erreicht, dass zusätzlich ein Demulgator mit mindestens einer funktionalen Gruppe hinzugefügt wird.

Die gute Wirkungsweise der gebrochenen Dispersion war überraschend. Denn durch den Bruch der wachshaltigen Dispersion wäre grundsätzlich zu erwarten gewesen, dass die gleichmäßige Verteilung des darin enthaltenen Wachses unterbunden und die wachshaltige Dispersion damit instabil würde. Bei Verwendung einer solchen instabilen, ungleichmäßigen Dispersion hätte man sowohl eine schlechte Dosierbarkeit und Stabilität der Dispersion, eine ungleichmäßige Verteilung innerhalb des Holzwerkstoffs bzw. auf dem darin enthaltenen lignocellulosehaltigen Material sowie eine ungleichmäßige und unzureichende Hydrophobierung des Holzwerkstoffs bzw. des darin enthaltenden lignocellulosehaltigen Materials erwartet. Entsprechend hätte man im Ergebnis mit einer Verschlechterung der Quelleigenschaften gerechnet.

Überraschenderweise wurde jedoch in praktischen Versuchen mit der erfindungsgemäßen gebrochenen Dispersion Holzwerkstoffe bzw. lignocellulosehaltiges Material erhalten, die eine gleichmäßige Hydrophobierung sowie Quellung innerhalb des Holzwerksstoffs bzw. des lignocellulosehaltigen Materials aufwiesen. Ohne an eine bestimmte wissenschaftliche Theorie gebunden sein zu wollen, ergibt sich diese überraschende Wirkung wahrscheinlich dadurch, dass die erfindungsgemäße gebrochene Dispersion die Vorteile sowohl von festen Paraffinen, als auch der lagerstabilen Paraffindispersionen aufweist. Durch den Dispersionsbruch findet wahrscheinlich, ähnlich wie bei den aus dem Stand der Technik bekannten geschmolzenen Paraffinsystemen, eine punktuelle Auftragung des Wachses statt, wodurch Bindungsstellen für das Bindemittel auf dem lignocellulosehaltigen Material freibleiben. Gleichzeitig bleibt jedoch die gute Dosierbarkeit und Verteilbarkeit der gebrochenen Dispersion aufgrund ihres flüssigen Zustands erhalten. Dies hat zur Folge, dass im Gegensatz zu den kommerziellen wachshaltigen Dispersionen, eine ausreichende Benetzung mit dem Bindemittel gewährleistet ist, was sich in einer Verbesserung der mechanischen Eigenschaften niederschlägt.

Der Erfindung liegt ferner die Erkenntnis zugrunde, dass durch die Entfernung des Emulgators, der üblicherweise in kommerziellen wachshaltigen Dispersion enthalten ist, die Quelleigenschaften des Endprodukts bzw. des darin enthaltenen lignocellulosehaltigen Materials verbessert werden können. Ohne an eine bestimmte wissenschaftliche Theorie gebunden sein zu wollen, scheint es so zu sein, dass der mit reaktiven (funktionellen) Gruppen ausgestattete Demulgator zumindest teilweise mit dem in der Dispersion vorhandenen Emulgator reagiert und diesen dadurch entfernt bzw. unwirksam macht.

Bekanntermaßen sind die Quelleigenschaften abhängig von der Wasseraufnahmefähigkeit. Emulgatoren weisen oftmals einen polaren und unpolaren Teil auf und lagern sich bevorzugt an den Grenzflächen zweier nicht oder nur schlecht miteinander mischbaren Phasen an, was ihre emulgierende Wirkungsweise begründet. Durch diese emulgierende Wirkung fördern Emulgatoren nicht nur die Wasseraufnahme sowie die Wassermischbarkeit in der wachshaltigen Dispersion, sondern auch die Wasseraufnahme und Wassermischbarkeit des Gemisches aus der wachshaltigen Dispersion und des lignocellulosehaltigem Materials. Die erleichterte Wasseraufnahme bzw. Wassermischbarkeit kann die Quelleigenschaften des lignocellulosehaltigen Materials deutlich verschlechtern. Der erfindungsgemäße Einsatz des Demulgators kann die Emulgator-bedingte erleichterte Wasseraufnahme reduzieren oder sogar ganz verhindern.

Vermutlich reagiert der Demulgator mit dem polaren Teil des Emulgators, wodurch dieser inaktiviert wird. Der überraschend positive Effekt des Einsatzes des erfindungsgemäßen Demulgators könnte sich zumindest dadurch erklären lassen, dass nur noch der unpolare Teil des Emulgators zur Verfügung steht, wodurch das Demulgator-Emulgator-Produkt z.B. auch als zusätzliches Hydrophobierungsmittel wirken kann.

Ein weiterer Vorteil der erfindungsgemäßen gebrochenen Dispersion ist, dass sich ihr Einsatz auf einfache Weise in übliche Verfahren der Holzindustrie zur Herstellung von Holzwerkstoffen integrieren lässt. Es sind keine aufwändigen Zwischenschritte oder Verfahrensunterbrechungen erforderlich. Die erfindungsgemäße gebrochene Dispersion kann vorgemischt und als Mischung eingesetzt werden. Alternativ können die wachshaltige Dispersion A) und der Demulgator B) im Zuge der Zugabe zu dem Holzmaterial gemischt und aufgetragen werden. Beide Typen der Zugabe können somit problemlos in bereits bestehende Verfahren der Holzindustrie integriert werden. Beispielsweise kann die Herstellung der gebrochenen Dispersion durch Mischen der wachshaltigen Dispersion mit dem Demulgator in einem üblichen Statikmischer erfolgen und dann über die Blowline aufgetragen werden. Die Herstellung der gebrochenen Dispersion kann aber auch im Zuge der Zugabe zu dem Holzmaterial in der Art erfolgen, dass die wachshaltige Dispersion mit dem Demulgator in der Blowline in Berührung gebracht wird, bevor diese dann als Mischung (gebrochene Dispersion) auf das Holzmaterial trifft. Hierfür können auch Zweistoffdüsen besonders vorteilhaft eingesetzt werden. Für derartige Anwendungen stellt die Erfindung auch ein Zweikomponentensystem ("kit-of-parts") aus wachshaltiger Dispersion A) und Demulgator B) bereit.

Vorteilhaft ist ferner, dass die erfindungsgemäß eingesetzte gebrochene Dispersion kostengünstig erhältlich und leicht verfügbar ist. In einer Ausführungsform werden zur Herstellung der erfindungsgemäßen gebrochenen Dispersion konventionelle wachshaltige Dispersionen, insbesondere Paraffindispersionen, eingesetzt. In praktischen Versuchen hat sich gezeigt, dass auf dem Markt erhältlichen bzw. üblichen Paraffindispersionen der erfindungsgemäße Demulgator hinzugegeben werden kann, wodurch es zum Dispersionsbruch kommt. Diese Mischung kann dann als erfindungsgemäße gebrochene Dispersion zur Hydrophobierung eingesetzt werden. Gemäß einer Ausführungsform erfolgt die Zugabe des Demulgators zu der wachshaltigen Dispersion erst kurz vor ihrem Einsatz als Hydrophobierungsmittel. Dadurch kann sowohl die gute Lagerstabilität der kommerziellen wachshaltigen Dispersionen ausgenutzt werden, als auch das gewünschte Mischungsverhältnis der wachshaltigen Dispersion und des Demulgators auf einfache Weise an die jeweiligen Herstellungserfordernisse und/oder Anforderungen an den Holzwerkstoff angepasst werden. Überdies kann so auch der Emulgator entfernt werden, wodurch die Wasseraufnahme und Wassermischbarkeit des lignocellulosehaltigen Materials deutlich verringert werden kann.

Weiterhin zeigt die gebrochene Dispersion eine gute Kompatibilität mit den üblicherweise in der Holzindustrie eingesetzten Bindemitteln, beispielsweise Aminoplastharzen. Gute Ergebnisse stellen sich auch dann ein, wenn das Bindemittel ein Isocyanat, insbesondere polymeres Diphenylmethandiisocyanat (PMDI), enthält oder daraus besteht.

Wichtige Kenngrößen für Holzwerkstoffe sind Quellung, Querzugfestigkeit und Wasseraufnahme. Praktische Versuche haben gezeigt, dass bei Verwendung der erfindungsgemäßen gebrochenen Dispersion bzw. des erfindungsgemäßen Demulgators, die Menge an konventionell eingesetzter wachshaltiger Dispersion reduziert werden kann, ohne dass es zu einer relevanten Verschlechterung dieser Kenngrößen kommt. Mindestens eine dieser Kenngrößen des erfindungsgemäßen Holzwerkstoffs kann gegenüber "konventionell" hydrophobierten Holzwerkstoffen (beispielsweise nur Paraffindispersion ohne Demulgator) verbessert werden, ohne dass es zu einer Verschlechterung der anderen Kenngrößen kommt. In Vergleichsversuchen mit Holzwerkstoffen, die durch konventionelle Paraffinemulsionen hydrophobiert wurden, wurde gefunden, dass die erfindungsgemäßen Holzwerkstoffe, die mit der gebrochenen Dispersion behandelt wurden, verbesserte Quellungseigenschaften bei gleichbleibender bzw. verbesserter Querzugfestigkeit aufwiesen.

Die Erfindung hat ferner auch wirtschaftlich relevante Vorteile: Kostenneutralität im Hinblick auf die eingesetzten Stoffe bei einer gleichzeitigen verbesserten Quelleigenschaften der durch das Verfahren erhältlichen Holzwerkstoffe sowie eine Kosteneinsparung durch reduzierten Dispersionseinsatz bei gleichbleibenden Quelleigenschaften.

Gegenstand der Erfindung ist eine gebrochene Dispersion sowie ein Demulgator zum Brechen einer wachshaltigen Dispersion. Dem Fachmann sind grundsätzlich unterschiedliche Verfahren zum Brechen einer Dispersion bekannt. Beispiele hierfür sind chemische Spaltverfahren (Salzspaltung, Säurespaltung), physikalische Spaltverfahren (thermische Verfahren), mechanische Verfahren (Membranverfahren, Flotation), elektrochemische Verfahren (Elektrokoagulation, Elektrophorese) oder Adsorptionsverfahren.

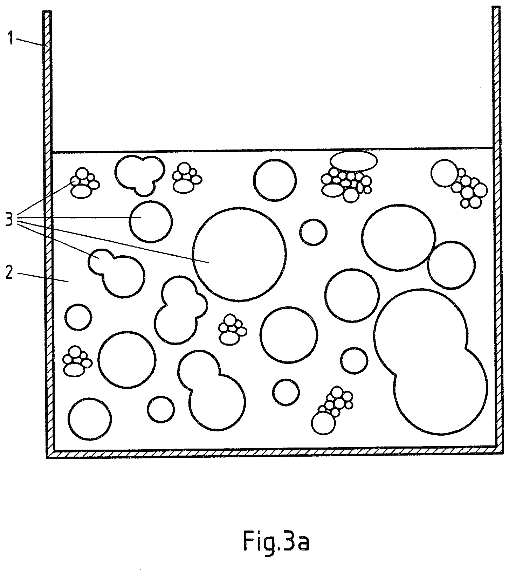

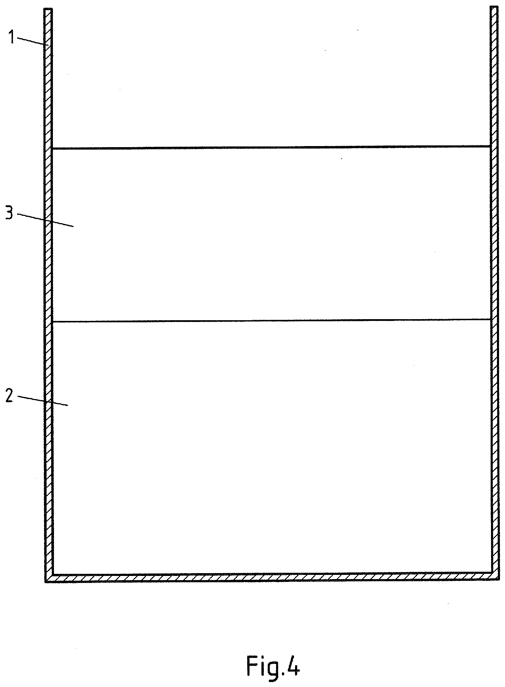

Die erfindungsgemäße gebrochene Dispersion wird durch "Brechen" der wachshaltigen Dispersion durch einen Demulgator erhalten. Wenn hier von "Brechen" oder "gebrochen" die Rede ist, dann ist damit eine ganze oder teilweise Phasentrennung der kontinuierlichen von der dispersen Phase gemeint. Anders ausgedrückt bedeutet dies, dass sich die Phasen mindestens teilweise entmischen, also die disperse Phase nicht mehr oder nur teilweise in der kontinuierlichen Phase verteilt vorliegt. Bei der erfindungsgemäßen gebrochenen Dispersion stellt sich mindestens eine teilweise Phasentrennung ein. Gebrochene Dispersion sind beispielhaft in den Figuren 3a bis 3d und Figur 4 dargestellt.

Diese mindestens teilweise Phasentrennung der Dispersion erfolgt erfindungsgemäß üblicherweise durch die Reaktion des Demulgators B) mit einem Bestandteil der wachshaltigen Dispersion A), wodurch der Emulgator mindestens teilweise seine emulgierende Wirkung verliert und es zum Brechen der Dispersion kommt. In einer Ausführungsform reagiert der Demulgator mit einem in der Komponente A) enthaltenen Bestandteil, insbesondere einem Zusatzstoff, wodurch die Bedingungen, beispielsweise der pH-Wert, in der wachshaltigen Dispersion bzw. der gebrochenen Dispersion verändert werden, und so die emulgierende Wirkung des Emulgators aufgehoben wird. In einer bevorzugten Ausführungsform reagiert der Demulgator (direkt oder indirekt) mit dem Emulgator, wodurch ein Reaktionsprodukt aus Demulgator und Emulgator entsteht, das dann in der gebrochenen Dispersion vorliegt. Durch Abreaktion des Emulgators verliert dieser seine emulgierenden Eigenschaften, was vermutlich die Ursache für den beobachteten Dispersionsbruch darstellt.

Die erfindungsgemäße gebrochene Dispersion wird durch Mischen der wachshaltigen Dispersion mit dem Demulgator erhalten. Diese Mischung wird erfindungsgemäß zur Hydrophobierung von lignocellulosehaltigem Material eingesetzt. In einer Ausführungsform wird zur Hydrophobierung des lignocellulosehaltigen Materials bzw. des Holzwerkstoffs eine Dispersion eingesetzt, wobei mindestens eine Phase dieser Dispersion die gebrochene Dispersion enthält.

Dispersionen bzw. disperse Systeme sind dem Fachmann grundsätzlich bekannt (vgl. "Pharmazeutische Technologie", Voigt, Deutscher Apotheker Verlag Stuttgart, 2000, S. 81 ff). "Dispersion" bezeichnet ein System aus mindestens zwei Phasen, von denen mindestens eine Phase eine kontinuierliche Phase, ein sogenanntes Dispersionsmittel, und mindestens eine weitere darin verteilte Phase, eine sogenannte disperse oder dispergierte Phase oder Dispergens, ist (vgl. auch DIN EN ISO 862:1995-10). Die kontinuierliche Phase kann flüssig, fest oder in einer Mischung daraus vorliegen. Üblicherweise ist die kontinuierliche Phase flüssig oder flüssig-fest. Wenn hier oder anderer Stelle von "flüssig" die Rede ist, dann sind damit bei Raumtemperatur (25 °C) flüssige Lösungen und/oder Dispersionen gemeint. Wenn nicht anders angegeben, sind alle hier genannten Werte bei Normaldruck gemessen. Erfindungsgemäß ist die kontinuierliche Phase der wachshaltigen Dispersion eine wässrige Phase. Die erfindungsgemäße wässrige kontinuierliche Phase enthält im Wesentlichen Wasser oder besteht daraus. "Im Wesentlichen" bedeutet hierbei größer gleich 80 Gew.-%, 90 Gew.-%, 95 Gew.-%, 99 Gew.-% oder 99,9 Gew.-%, jeweils bezogen auf das Gesamtgewicht der wässrigen kontinuierlichen Phase. Die disperse Phase der wachshaltigen Dispersion hingegen enthält Wachs oder besteht daraus. Insbesondere kann die disperse Phase flüssig, fest oder in einer Mischung daraus vorliegen.

In der intakten, d.h. noch ungebrochenen Dispersion, liegt die disperse Phase erfindungsgemäß fein verteilt in der kontinuierlichen Phase der wachshaltigen Dispersion vor. Wenn hier von "fein verteilt" die Rede ist, dann ist damit eine kolloidal disperse Verteilung (Partikeldurchmesser der dispersen Phase 1 nm bis 1 µm) und/oder eine grob disperse Verteilung (Partikeldurchmesser der dispersen Phase größer als 1 µm) der Partikel der dispersen Phase gemeint. Eine kolloidale Lösung liegt vor, wenn der Partikeldurchmesser der dispersen Phase kleiner als 1 nm ist. Dabei kann die disperse Phase monodispers oder heterodispers verteilt vorliegen. Bei einer monodispersen Verteilung weisen die Partikel der dispersen Phase in etwa den gleichen Partikeldurchmesser auf. Bei einer heterodispersen Verteilung liegen die Partikel der dispersen Phase in unterschiedlichen Partikeldurchmessern vor. Dem Fachmann sind verschiedene Definitionen von "Partikeldurchmesser" und Verfahren zur Bestimmung des Partikeldurchmessers bekannt (vgl. "Pharmazeutische Technologie", Voigt, Deutscher Apotheker Verlag Stuttgart, 2000, S. 29 ff). Wenn hier von "Partikeldurchmesser" die Rede ist, dann wird hierunter der durchschnittliche Durchmesser des flächengleichen Kreises verstanden.

Weiterhin kann eine Dispersion im Sinne der Erfindung ausgewählt sein aus einer kolloidalen Lösung, Emulsion, Suspension, Aerosol oder Schaum. Die mindestens zwei Phasen dieser Dispersionen können unabhängig voneinander selbst eine Dispersion sein. Weiterhin können diese Dispersionen noch einer weitere Phase, beispielsweise eine weitere disperse Phase, enthalten.

Gemäß einer Ausführungsform ist die wachshaltige Dispersion eine Emulsion. Üblicherweise enthält eine Emulsion mindestens zwei nicht miteinander mischbare flüssige Phasen. Dem Fachmann sind Emulsionen bekannt (vgl. "Pharmazeutische Technologie", Voigt, Deutscher Apotheker Verlag Stuttgart, 2000, S. 343 ff). Grundsätzlich unterscheidet der Fachmann die Phasen der Emulsion in eine sogenannte "ölige" und eine "wässrige" Phase. Wenn hier oder anderer Stelle von "öliger Phase" die Rede ist, dann ist damit grundsätzlich eine lipophile Phase gemeint. Wenn hier oder anderer Stelle von "wässriger Phase" die Rede ist, dann ist damit grundsätzlich eine hydrophile Phase gemeint, die Wasser enthält oder daraus besteht. Die Emulsion im Sinne der Erfindung ist eine Dispersion, die mindestens einen Emulgator, mindestens eine wässrige kontinuierliche Phase und eine ölige disperse Phase, die Wachs enthält. Die Emulsion kann aber auch eine weitere ölige Phase enthalten.

In einer Ausführungsform ist die Emulsion eine Öl-in-Wasser-Emulsion. Unter einer Öl-in-Wasser-Emulsion versteht der Fachmann eine Emulsion, bei der die ölige Phase in die wässrige Phase dispergiert ist. In dieser Ausführungsform enthält die kontinuierliche Phase die wässrige Phase und die ölige Phase enthält ein Wachs.

In einer weiteren Ausführungsform ist die Emulsion eine mehrfache Dispersion, insbesondere eine Wasser-in-Öl-in-Wasser-Emulsion oder eine Öl-in-Wasser-in-Öl-Emulsion. Mehrfache Emulsionen sind dem Fachmann bekannt. Diese mehrfachen Emulsionen weisen mindestens eine disperse Phase auf, in die eine weitere disperse Phase dispergiert ist. Bei der Wasser-in-Öl-in-Wasser-Emulsion (W/O/W-Emulsion) ist die erste bzw. äußere kontinuierliche Phase die wässrige Phase und die darin feinverteilte Phase die wachsenthaltende Phase. In diese wachsenthaltende Phase ist zusätzlich eine weitere wässrige Phase dispergiert. Bei der Öl-in-Wasser-in-Öl-Emulsionen (O/W/O-Emulsion) ist die erste bzw. äußere kontinuierliche Phase eine "ölige" Phase und die darin fein verteilte Phase ist die wässrige Phase. In diese wässrige (kontinuierliche) Phase ist die wachsenthaltende Phase dispergiert, das heißt, dass die wässrige Phase die kontinuierliche Phase und die wachsenthaltene Phase die disperse Phase ist.

In einer Ausführungsform ist die gebrochene Dispersion eine gebrochene Mehrfachemulsion. In einer anderen Ausführungsform wird zur Hydrophobierung des lignocellulosehaltigen Materials bzw. des Holzwerkstoffs eine Mehrfachemulsion eingesetzt, wobei mindestens eine Phase dieser Mehrfachemulsion ganz oder teilweise die gebrochene Dispersion enthält.

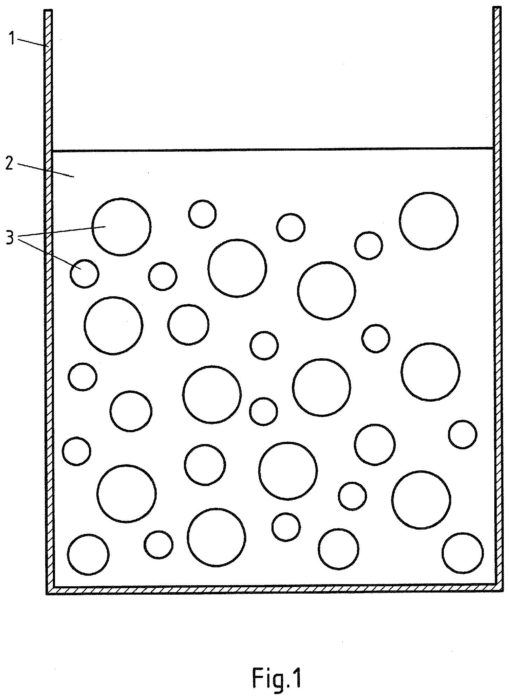

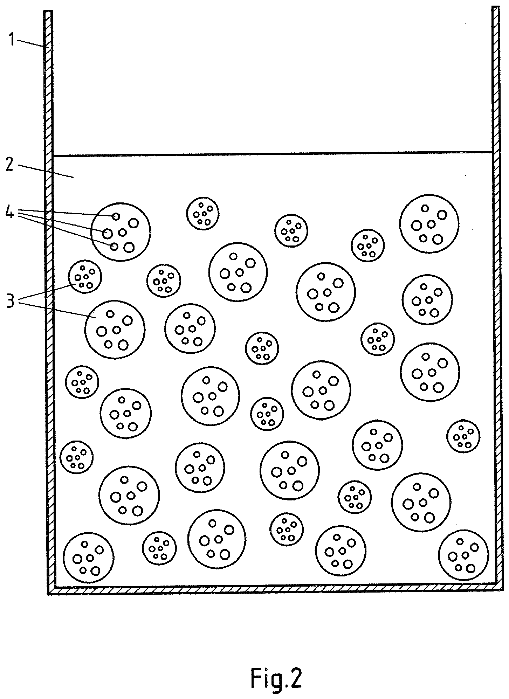

Eine einfache und eine mehrfache Emulsion sind beispielsweise in Figuren 1 und 2 dargestellt. In einer Ausführungsform der einfachen Emulsion ist die wässrige kontinuierliche Phase die kontinuierliche Phase (2) und die wachsenthaltende Phase die disperse Phase (3) der Figur 1. In einer andern Ausführungsform der mehrfachen Emulsion ist die die kontinuierliche wässrige Phase der erfindungsgemäßen wachshaltigen Dispersion die disperse Phase (3) und die wachsenthaltende die disperse Phase (4) der Figur 2.

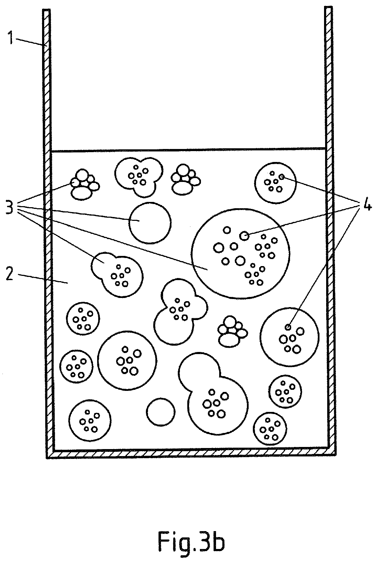

Gebrochene einfache oder mehrfache Dispersionen sind beispielsweise in den Figuren 3a bis 3d dargestellt. In einer Ausführungsform der einfachen Emulsion ist die wässrige Phase die kontinuierliche Phase (2) und die wachsenthaltende Phase die disperse Phase (3) der Figur 3a. In einer andern Ausführungsform der mehrfachen Emulsion ist die die kontinuierliche wässrige Phase der erfindungsgemäßen wachshaltigen Dispersion die disperse Phase (3) und die wachsenthaltende die disperse Phase (4) der Figur 3b.

Gemäß einer weiteren Ausführungsform der Erfindung ist die Dispersion eine Suspension. Suspensionen sind dem Fachmann grundsätzlich als Dispersionen bekannt, die mindestens eine flüssige kontinuierliche Phase und eine feste disperse Phase enthalten. Eine "Suspension" im Sinne der Erfindung ist eine Dispersion, die einen Emulgator enthält und bei der die kontinuierliche Phase die wässrige Phase und die disperse Phase Wachs enthält. Die Suspension kann zusätzlich noch mindestens eine weitere disperse Phase enthalten.

Überdies ist es denkbar, dass die Dispersion auch als Aerosol oder als Schaum bzw. Nebel oder Zerstäubung eingesetzt werden kann. Aerosole sowie Schäume können direkt eingesetzt werden oder in der Praxis beispielsweise beim Aufsprühen oder Aufdüsen der wachshaltigen Dispersion und/oder die gebrochenen Dispersion entstehen.

In einer Ausführungsform ist die Dispersion ein Aerosol, welches die wachshaltige Dispersion und/oder die gebrochene Dispersion enthält. Aerosole sind dem Fachmann grundsätzlich als Dispersionen mit einer gasförmigen kontinuierlichen Phase und einer festen oder/und flüssigen dispersen Phase bekannt. In dieser Ausführungsform ist die disperse Phase des Aerosols die wachshaltige und/oder gebrochene Dispersion und die kontinuierliche Phase eine gasförmige Phase, insbesondere Luft und/oder Wasserdampf.

In einer weiteren Ausführungsform der Erfindung ist die Dispersion ein Schaum, welcher die wachshaltige Dispersion und/oder die gebrochene Dispersion enthält. Schäume sind dem Fachmann grundsätzlich als Dispersionen bekannt, die eine kontinuierliche flüssige Phase und eine gasförmige disperse Phase enthalten. In dieser Ausführungsform ist die kontinuierliche Phase des Schaums die wachshaltige Dispersion und/oder die gebrochene Dispersion und die disperse Phase eine gasförmige Phase, insbesondere Luft und/oder Wasserdampf.
Die erfindungsgemäße Dispersion kann zusätzlich mindestens einen weiteren Zusatzstoff enthalten. Zusatzstoffe können Feuerschutzmittel, Pilzschutzmittel, die Leitfähigkeit beeinflussende Substanzen, Farbstoffe oder Färbemittel, Lösungsmittel, Lösungsvermittler, viskositätsangleichende Mittel, Benetzungsmittel, Emulgatoren, pH-angleichende Mittel, Fette, Fettsäuren oder Stabilisatoren sein.

Weiterhin enthält die Dispersion im Sinne der Erfindung einen Emulgator. Emulgatoren können in eine Menge von 0,1 bis 10 Gew.-%, bevorzugt zu 0,2 bis 6 Gew.-% und besonders bevorzugt 0,2 bis 4,0 Gew.-%, jeweils bezogen auf das Gesamtgewicht der Dispersion, eingesetzt werden. Verschiedene Emulgatoren sowie deren Aufbau und Wirkweise sind dem Fachmann grundsätzlich bekannt (vgl. "Pharmazeutische Technologie", Voigt, Deutscher Apotheker Verlag Stuttgart, 2000, S. 348 ff). Emulgatoren stabilisieren Dispersionen oder tragen zu ihrer Stabilisierung bei. Wenn hier von "Emulgator" die Rede ist, dann ist damit jegliches Dispergiermittel gemeint, das eine Dispersion ganz oder teilweise stabilisiert. Typischerweise ist ein Emulgator im Sinne der Erfindung eine grenzflächenaktive Substanz, die das Dispergieren mindestens einer dispersen Phase in eine kontinuierliche Phase erleichtert. Unter "grenzflächenaktive Substanz" wird eine Verbindung verstanden, die sich an Grenzflächen von mindestens zwei nicht miteinander mischbaren Phasen anreichert und dadurch die Grenzflächenspannung und/oder die Oberflächenspannung herabsetzt oder dazu beiträgt. Durch die ganz oder teilweise Herabsetzung der Oberflächenspannung bzw. der Grenzflächenspannung zwischen mindestens zwei Phasen, kann so die Verteilung der mindestens einen dispersen Phase in der kontinuierlichen Phase der Dispersion gefördert werden. Typischerweise sind grenzflächenaktive Substanzen amphotere Substanzen, die sowohl hydrophile als auch lipophile Eigenschaften besitzen. Diese grenzflächenaktiven Substanzen bzw. Emulgatoren können nach HLB-Wert und/oder in O/W-Emulgatoren, W/O-Emulgatoren oder Mischungen daraus eingeteilt werden (vgl. "Pharmazeutische Technologie", Voigt, Deutscher Apotheker Verlag Stuttgart, 2000, S. 348 ff). Hierbei steht HLB für "hydrophilic-lipophilic balance", einem für den Fachmann geläufigen Fachbegriff.

Ein "Emulgator" im Sinne der Erfindung kann auch ein Tensid sein, insbesondere ein nichtionisches, anionisches, kationisches oder amphoteres Tensid. Unter Tensiden versteht der Fachmann Substanzen, die die Oberflächenspannung einer Flüssigkeit oder die Grenzflächenspannung zwischen zwei Phasen herabsetzen und die Bildung von Dispersionen stabilisieren oder zu ihrer Stabilisierung beitragen. Damit sind Tenside grenzflächenaktive Substanzen. Grundsätzlich bestehen Tenside aus einem unpolaren (hydrophoben) und einem polaren (hydrophilen) Teil. Als unpolarer Teil kann z.B. eine Alkylgruppe dienen. Der polare Teil kann verschieden aufgebaut sein und bestimmt die Klassifizierung der Tenside in nichtionische, anionische, kationische und amphotere Tenside. Nichtionische Tenside können als unpolare Gruppe einen Alkoholrest (C12-C18) und als polare Gruppen eine Hydroxygruppe und/oder eine Ethergruppe aufweisen. Anionische Tenside weisen mindestens eine negativ geladene funktionale Gruppe auf. Die polare Gruppe kann dabei eine negativ geladene funktionale Gruppe, insbesondere -COO- (Carboxylat), -SO₃- (Sulfonat) oder -SO₄²-(Sulfat) sein. Kationische Tenside können als polare Gruppe beispielsweise eine quartäre Ammonium-Gruppe (R₄N⁺) aufweisen. Amphotere Tenside (oder auch als zwitterionische Tenside) weisen sowohl eine negativ als auch eine positiv geladene funktionale Gruppe, insbesondere eine Carboxylat-Gruppe (R-COO-) zusammen mit einer quartären Ammonium-Gruppe (R₄N⁺), auf.

Weitere Beispiele für Emulgatoren im Sinne der Erfindung sind Alkoholpolyethylenglykolether (allgemeine Formel R-O-(R¹-O)ₙ-H), Fettsäureesterpolyethylenglykolether (allgemeine Formel R-COO-(R¹-O)ₙ-H), Alkylpolyalkylenglykolethercarbonsäuren (allgemeine Formel R-O-(R¹-O)ₙ-CH₂-COOH), Alkanolammonium- oder Alkali- oder Erdalkalimetallsalze von Alkylpolyalkylenglykolethercarbonsäuren, (allgemeine Formel R-CONH(CH₂)ᵤN⁺(CH₃)₂-CH₂-COO-), Aminoxide (allgemeine Formel R-NO(CH₃)₂), wobei jeweils R einen verzweigten oder linearen, gesättigten oder ungesättigten C8- bis C20-bzw. C7- bis C19-Kohlenwasserstoffrest, n eine Zahl von 2 bis 20, R¹ einen Alkylenrest mit 2 bis 4 Kohlenwasserstoffen, beispielsweise -C₂H₄- oder -C₃H₆-, optional für jedes n verschieden, und u eine Zahl von 1 bis 10 darstellt. Weitere Beispiele für Emulgatoren sind Produkte aus der Alkoxylierung von Triglyceriden, die ganz oder teilweise mit C6- bis C22-Fettsäuren verestert sind, wobei pro Mol Triglycerid 2 bis 40 Mol Alkoxylierungsmittel eingesetzt werden, partiell neutralisierte Partialglyceride von ein oder mehrwertigen C2- bis C22-Carbonsäuren, beispielsweise Linolsäure, Stearinsäure, Isostearinsäure, Palmitinsäure, Laurinsäure, Caprylsäure, Caprinsäure, Citronensäure und/oder Milchsäure. Emulgatoren im Sinne der Erfindung können auch Ester des Polyglycerins, worin die Carbonsäure-Gruppe vorzugsweise 2 bis 22 Kohlenstoffatome aufweisen kann, C6- bis C32- Carbonsäuren, insbesondere C8- bis C26-Fettsäuren vollständig oder partiell, insbesondere vollständig verseift, beispielsweise mit Aminen oder Aminverbindungen wie Alkanolaminen, insbesondere Diethanolamin und/oder Triethanolamin, sein. In einer Ausführungsform ist das Alkonolamin silyliert, insbesondere zwei- oder dreifach silyliert.

Weiterhin gehören zu den anionischen Emulgatoren beispielsweise Carboxylate, insbesondere Alkali-, Erdalkali- und Ammoniumsalze von Fettsäuren, beispielsweise Kaliumstearat, die üblicherweise auch als Seifen bezeichnet werden, Acylglutamate, Sarkosinate, beispielsweise Natriumlauroylsarkosinat, Taurate, Methylcellulosen, Alkylphosphate, insbesondere Mono- und Diphosphorsäurealkylester, Sulfate, insbesondere Alkylsulfate und Alkylethersulfate, Sulfonate, weitere Alkyl- und Alkylarylsulfonate, insbesondere Alkali-, Erdalkali- und Ammoniumsalze von Arylsulfonsäuren sowie alkylsubstituierte Arylsulfonsäuren, Alkylbenzolsulfonsäuren, wie beispielsweise Lignin- und Phenolsulfonsäure, Naphthalin- und Dibutylnaphthalinsulfonsäuren, oder Dodecylbenzolsulfonate, Alkylnaphthalinsulfonate, Alkylmethylestersulfonate, Kondensationsprodukte von sulfoniertem Naphthalin und Derivaten davon mit Formaldehyd, Kondensationsprodukte von Naphthalinsulfonsäuren, Phenol- und/oder Phenolsulfonsäuren mit Formaldehyd oder mit Formaldehyd und Harnstoff, Mono- oder Dialkylbernsteinsäureestersulfonate, sowie Eiweißhydrolysate und Lignin-Sulfitablaugen, gegebenenfalls in Form ihrer neutralen oder gegebenenfalls basischen Salze. Zu den nichtionischen Emulgatoren gehören, beispielsweise Fettalkoholalkoxylate und Oxoalkoholalkoxylate, insbesondere Ethoxylate und Propoxilate mit Alkoxylierungsgraden von üblicherweise 2 bis 80 und insbesondere 3 bis 40, beispielsweise Alkoxylate von C8- bis C30-Alkanolen oder Alk(adi)enolen, beispielsweise von iso-Tridecylalkohol, Laurylalkohol, Oleylalkohol oder Stearylalkohol sowie deren Alkylether und Alkylester, beispielsweise deren Acetate, alkoxylierte tierische und/oder pflanzliche Fette und/oder Öle, beispielsweise Maisölethoxylate, Rizinusölethoxylate, Talgfettethoxylate mit Alkoxylierungsgraden von üblicherweise 2 bis 80 und insbesondere 3 bis 40, Glycerinester, wie beispielsweise Glycerinmonostearat, Fettsäureester polymerer Alkoxylate, insbesondere von Polyethylenoxiden mit Alkoxilierungsgraden von 3 bis 100 wie beispielsweise PEG 300-Oleat, -Stearat oder -Laurat, als Mono- oder Diester, copolymere Alkoxylate aus Ethylenoxid und Propylenoxid, Alkylphenolalkoxylate, wie beispielsweise ethoxyliertes iso-Octyl-, Octyl- oder Nonyl-Phenol, Tributylphenolpolyoxyethylenether mit Alkoxylierungsgraden von üblicherweise 2 bis 80 und insbesondere 3 bis 50, Fettaminalkoxylate, Fettsäureamid- und Fettsäurediethanolamidalkoxylate mit Alkoxylierungsgraden von üblicherweise 2 bis 80 und insbesondere 3 bis 50, insbesondere deren Ethoxylate, Zuckertenside, Sorbitester, wie beispielsweise Sorbitanfettsäureester (Sorbitanmonooleat, Sorbitantristearat), Polyoxyethylensorbitanfettsäureester, Alkylpolyglycoside, N-Alkylgluconamide, Alkylmethylsulfoxide, Alkyldimethylphosphinoxide, wie beispielsweise Tetradecyldimethylphosphinoxid.

Weitere Beispiele für Emulgatoren sind Perfluoremulgatoren, Silikonemulgtoren, Phospholipide, wie beispielsweise Lecithin oder chemisch modifizierte Lecithine, Aminosäureemulgatoren, beispielsweise N-Lauroylglutamat. Emulgatoren im Sinne der Erfindung sind auch hochmolekulare Substanzen wie Gummi Arabicum, Gum Ghatti oder Celluloseverbindungen. Überdies können auch Emulgator-Gemische eingesetzt werden, beispielsweise ein anionischer und ein nicht-ionischer Emulgator. Auch Emulgatoren im Sinne der Erfindung sind Fettalkohole, insbesondere Fettalkohole mit einer Kettenlänge von 12 bis 22 Kohlenwasserstoffatomen.

Andere einsetzbare Emulgatoren im Sinne der Erfindung sind auch Fettalkohole. Fettalkohole sind typischerweise Alkanole und werden meist durch eine chemischen Reaktion aus Fettsäuren gewonnen. Dabei wird die für Carbonsäuren typische Carboxylgruppe (-COOH) zu der für Alkohole typischen Hydroxylgruppe (-OH) überführt. Das Kohlenstoffatom der -COOH Gruppe bleibt als -CH₂-OH erhalten. Da Fettsäuren meist über eine gerade Anzahl an Kohlenstoffatomen verfügen, haben auch die entsprechenden Fettalkohole eine gerade Anzahl. Ebenso wie die Fettsäuren können auch die Fettalkohole ungesättigt sein. Die Bezeichnung Fettalkohol wird für Alkohole mit Kettenlänge von sechs (Hexanol) bis hin zu 22 Kohlenstoffatomen (Behenylalkohol) verwendet. Die höheren primären Alkohole mit 24 bis 36 Kohlenstoffatome bezeichnet man als Wachsalkohole. Diese finden sich in gebundener Form als Carbonsäureester in natürlichen Wachsen, wie beispielsweise im Wollwachs.

Weitere Beispiele für Emulgatoren im Sinne der Erfindung sind auch Fettsäuren, die eine Kettenlänge von 10 bis 26, insbesondere von 12 bis 24 Kohlenstoffatomen aufweisen. "Fettsäuren" ist eine Gruppenbezeichnung für Monocarbonsäuren, die eine Carboxylgruppe (-COOH) und eine Kohlenwasserstoffkette aufweisen. Fettsäuren können linear oder verzweigt sein. Weiterhin unterscheidet der Fachmann gesättigte von ungesättigten Fettsäuren. Eine gesättigte Fettsäure ist eine Fettsäure, die keine Doppelbindungen zwischen Kohlenstoffatomen aufweist. Die gesättigten Fettsäuren bilden eine sogenannte homologe Reihe mit der Summenformel CₙH₂ₙ₊₁COOH. Ungesättigte Fettsäuren besitzen eine Doppelbindung und mehrfach ungesättigte Fettsäuren haben zwei oder mehrere Doppelbindungen zwischen den Kohlenstoffatomen der Kette.

In einer Ausführungsform ist der Emulgator ausgewählt aus der Gruppe bestehend aus Diethanolamin, Triethanolamin, silyliertem Di- oder Triethanolamin, Diethanolglycin, Octadecanol, einer Fettsäure, die eine Kettenlänge von 10 bis 26, insbesondere von 12 bis 24 Kohlenstoffatomen aufweist, Harnstoff, und Mischungen daraus.

Weiterhin ist Gegenstand der Erfindung ein Demulgator mit mindestens einer funktionalen Gruppe, unter dessen Verwendung die erfindungsgemäße gebrochene Dispersion erhalten wird. "Demulgator" im Sinne der Erfindung ist jede Substanz, die zum Destabilisieren bzw. zum Brechen einer Dispersion führt. Die funktionale Gruppe des Demulgators sollte dazu geeignet sein, mit mindestens einem Bestandteil der Dispersion, insbesondere dem Emulgator, zu reagieren bzw. diesen vernetzen zu können. Die funktionale Gruppe des Demulgators kann auch dazu geeignet sein, mit mindestens einem Zusatzstoff zu reagieren bzw. diesen zu vernetzen. Ein Demulgator im Sinne der Erfindung kann auch mehrere funktionale Gruppen aufweisen (d.h. polyfunktional sein). Die funktionalen Gruppen können dabei gleich oder verschieden voneinander sein.

In einer bevorzugten Ausführungsform reagiert der Demulgator mit dem Emulgator, der in der wachshaltigen Dispersion enthalten ist. Die gebrochene Dispersion enthält daher vorzugsweise ein Reaktionsprodukt aus Emulgator und Demulgator. Ohne an eine wissenschaftliche Theorie gebunden sein zu wollen, ist diese Reaktion wahrscheinlich für das Brechen der Dispersion verantwortlich, da der Emulgator in diesem Reaktionsprodukt nicht mehr ausreichend seine emulgierende Wirkung entfalten kann.

In einer Ausführungsform ist der erfindungsgemäße Demulgator eine funktionale Verbindung (d.h. es existiert mindestens eine funktionale Gruppe pro Demulgatormolekül), insbesondere eine polyfunktionale Verbindung. Polyfunktional bedeutet dabei, dass mehr als eine, insbesondere unterschiedliche funktionale Gruppen im Demulgator Molekül vorhanden sind. In einer Ausführungsform ist mindestens eine der funktionalen Gruppen eine Isocyanatgruppe. Der Demulgator ist somit vorzugweise ein Isocyanat, insbesondere ein Polyisocyanat. Das Isocyanat kann aber auch eine weitere funktionale Gruppe aufweisen, die kein Isocyanat ist. Wenn hier oder an anderer Stelle von Isocyanaten die Rede ist, dann sind damit auch Polyisocyanate gemeint. In einer weiteren bevorzugten Ausführungsform ist der Demulgator ein aromatisches Isocyanat, insbesondere ein polymeres Diphenylmethandiisocyanat (PMDI).

Aliphatische und cycloaliphatische Isocyanate, die als Demulgator im Sinne der Erfindung eingesetzt werden können, können ausgewählt sein aus Hexamethylendiisocyanat, Isophorondiisocyanat, und 1,4-Cyclohexyldiisocyanat. Aromatischen Polyisocyanate, Toluylendiisocyanat und polymeres Diphenylmethandiisocyanat (PMDI).

In einer Ausführungsform enthält das Bindemittel PMDI oder besteht sogar daraus. In diesem Fall kann die Gesamtmenge des polymeren Diphenylmethandiisocyanat (PMDI) 0,1 bis 400 Gew.-% (fest/fest), bevorzugt 5 bis 200 Gew.-% (fest/fest), und besonders bevorzugt 10 bis 100 Gew.-% (fest/fest), jeweils bezogen auf das Gesamtfeststoffgewicht der gebrochenen Dispersion und des Bindemittels, betragen.

In einer alternativen Ausführungsform ist mindestens eine funktionale Gruppe des Demulgators ein Epoxid, insbesondere ein bifunktionales Epoxid.

In einer weiteren Ausführungsform der Erfindung wird der Demulgator zur Herstellung der gebrochenen Dispersion in Mengen von 0,05 bis 1 Gew.-% (fest/fest), bevorzugt 0,08 bis 0,8 Gew.-% (fest/fest), und besonders bevorzugt 0,1 bis 0,5 Gew.-% (fest/fest), jeweils bezogen auf das Gesamtfeststoffgewicht der gebrochenen Dispersion, eingesetzt.

Der Demulgator kann in fester, flüssiger Form oder als Dispersion eingesetzt werden. Insbesondere kann der Demulgator in flüssiger Form mit 100 Gew.-% Feststoffanteil, bezogen auf das Gesamtgewicht des Demulgators, vorliegen.

Weiterhin enthält die erfindungsgemäße gebrochene Dispersion ein Wachs. In einer Ausführungsform ist das Wachs ausgewählt aus natürlichen Wachsen und/oder Paraffin. In einer bevorzugten Ausführungsform ist das Paraffin ausgewählt aus C₁₀ bis C₅₀-Alkanen und Paraffinwachs. Das Paraffinwachs kann insbesondere ausgewählt sein kann aus der Gruppe bestehend aus erdölbasierten Paraffinwachsen, Weichwachsen, Fischer-Tropsch-Paraffinen sowie Mischungen und Raffinationsprodukten hiervon.

In einer Ausführungsform beträgt das Trockensubstanzgehalt der wachshaltigen Dispersion 10 bis 90 Gew.-%, bevorzugt 20 bis 80 Gew.-% und besonders bevorzugt 30 bis 70 Gew.-%, jeweils bezogen auf das Gesamtgewicht der wachshaltigen Dispersion.

Weiterhin kann das Wachs bzw. die wachshaltige Dispersion Fettsäuren enthalten. In einer Ausführungsform enthält die wachshaltige Dispersion
- 10 bis 95 %, bevorzugt 15 bis 90 Gew.-%, C₁₀ bis Cso-Alkane und/oder
- 1 bis 70 %, bevorzugt 2 bis 60 Gew.-%, Fettsäuren,
jeweils bezogen auf die Gesamtmenge an Trockensubstanz in der wachshaltigen Dispersion.

Unter den Begriff "Wachs" im Sinne der Erfindung fallen natürliches, synthetisches, modifiziertes Wachs und/oder Mischungen davon. Die Herstellung bzw. Gewinnung von Wachsen kann ganz oder teilweise synthetisch oder durch Isolierung bzw. Extraktion erfolgen. Verfahren zur Herstellung bzw. Gewinnung von Wachsen sind dem Fachmann grundsätzlich bekannt.

Synthetische Wachse, deren Hauptbestandteil üblicherweise (Hart)Paraffin ist, werden beispielsweise hauptsächlich aus Mineralöl gewonnen. Unter "Mineralöl" versteht der Fachmann eine Sammelbezeichnung für die aus mineralischen Rohstoffen (Erdöl, Braun- und Steinkohlen, Holz, Torf) gewonnenen flüssigen Destillationsprodukte, die im Wesentlichen aus Gemischen von gesättigten Kohlenwasserstoffen bestehen. Analog werden mitunter die festen und halbfesten Gemische höherer Kohlenwasserstoffe als Mineralfette bzw. -wachse bezeichnet. Beispiele hierfür sind Ceresin, Vaseline, Paraffin. Die Analyse von Gemischen fetter und mineralischer Öle lässt sich IR-spektroskopisch und/oder durch Bestimmung der Fettkennzahlen, beispielsweise Bestimmung der unverseifbaren Anteile, durchführen. Diese analytischen Methoden sowie die Bestimmung der Fettkennzahlen sind dem Fachmann grundsätzlich bekannt (vgl. "Analytik II", Ehlers, Deutscher Apothekerverlag Stuttgart, 2002, S. 91-192).

Eine vollständige Synthese, wie beispielsweise mit Polyethylenen, ist auch möglich. Synthetische Wachse sind beispielsweise Polyalkylenwachse (Polyolefinwachse, Polyethylenwachse, Polyopropylenwachse), Polyethylenglycolwachse, Amidwachse. Vollsynthetische Kohlenwasserstoff-Wachse, zu denen Fischer-Tropsch-Wachse und die Polyolefinwachse gehören, können aus den in der Kohlevergasung und petrochemisch gewonnenen Rohstoffen nach Hoch-, Mittel- und Niederdruckpolymerisationsverfahren hergestellt werden. Häufig werden diese "Kohlenwasserstoff-Wachse durch nachträgliche Oxidation (zum Beispiel Polyethylenwachs-Oxidate) oder - im Fall der Polyolefinwachse auch durch Comonomere - mit Carboxy-Gruppen funktionalisiert. Fettsäuren, die eine Kohlenstoffkette von 12 bis 28 Kohlenstoffatomen aufweisen können, stellen die Grundlage für Mono-, Bis- und Polyamidwachse dar.

Weiterhin können Wachse im Sinne der Erfindung auch natürliche Wachse sowie ganz oder teilweise chemisch modifizierte Wachse sein. Die Gewinnung der natürlichen Wachse erfolgt meist durch Extraktion mit nachfolgender Reinigung (Filtration), Bleichen und Konfektionierung. Durch chemische Weiterverarbeitung wie Oxidation, Veresterung und Verseifung erhält man chemisch modifizierte bzw. teilsynthetische Wachse.

Wachse sind in der Regel Multi-Komponentensysteme und können dadurch auch über ihre mechanisch-physikalischen Eigenschaften definiert werden. Wachse werden beispielsweise über ihren Ölanteil, Schmelzpunkt und/oder Viskosität charakterisiert. Unter "Wachs" im Sinne der Erfindung werden auch allgemein organische Zusammensetzungen verstanden, die bei 25 °C fest sind, beispielsweise bei Normaldruck (1013 mbar) von verformbar weich über knetbar bis brüchig hart. Wachse schmelzen über dem Erstarrungspunkt ohne Zersetzung, sind wenig oberhalb des Schmelzpunktes flüssig und hierbei relativ niedrig viskos und nicht fadenziehend. Wachs kann anteilig langkettige Kohlenwasserstoffe enthalten. Aliphatische langkettige Kohlenwasserstoffe im Sinne der Erfindung sind Verbindungen, die aus Kohlenstoff und Wasserstoff bestehen und insbesondere Erstarrungspunkte von 35 bis 150 °C, vorzugsweise von 40 bis 100 °C bei Normaldruck bzw. in Bezug auf die Stoffzusammensetzung aufweisen bzw. unabhängig hiervon mittlere Kohlenstoffkettenlängen von 20 bis 100 Kohlenstoffatomen, insbesondere von 20 bis 50 Kohlenstoffatomen, aufweisen. Als Kohlenwasserstoffe im Sinne der Erfindung können gesättigte, ungesättigte, lineare, verzweigte, cyclische Kohlenwasserstoffe und/oder Mischungen daraus eingesetzt werden. In einer Ausführungsform enthält das Wachs gesättigte Kohlenwasserstoffe oder besteht daraus. In praktischen Versuchen hat sich gezeigt, dass übliche, in der Holzwerkstoffindustrie eingesetzte kommerzielle Wachse zur Herstellung der erfindungsgemäßen gebrochenen Dispersion eingesetzt werden können. Kommerzielle Wachse bzw.

Wachsdispersionen zur Hydrophobierung von Holzwerkstoffen sind üblicherweise Paraffindispersionen. Diese enthalten oftmals neben Paraffin bzw. Paraffinwachs mindestens ein weiteres Wachs, Öl oder Fettsäuren.

Die wachshaltige Dispersion kann ein natürliches Wachs enthalten. "Natürliches Wachs" im Sinne der Erfindung kann ein pflanzliches Wachs, tierisches Wachs und/oder Mineralwachs sein. Das natürliche Wachs kann ganz oder teilweise chemisch modifiziert sein. Beispiele für natürliche pflanzliche Wachse sind Baumwollwachs, Carnaubawachs, Candetillawachs, Espartowachs, Guarumawachs, Japanwachs, Korkwachs, Montanwachs, Ouricurywachs, Reiskeimölwachs, Zuckerrohrwachs. Tierische natürliche Wachse sind Bienenwachs, Bürzeldrüsenfett, Wollwachs, Schellackwachs, Walrat. Mineralwachse sind beispielsweise Mikrowachse, Ceresin, Ozokent.

Der Begriff "natürliches Wachs" im engeren Sinne kann auch eine Sammelbezeichnung für Ester langkettiger Fettsäuren (C24-C36) (Wachssäuren) mit langkettigen Alkoholen (Fettalkoholen) bedeuten, insbesondere Cetylalkohol (Hexadecan-1-ol) und Stearylalkohol (Octadecan-1-ol), Triterpen oder Steroidalkoholen, insbesondere Ambrein oder Betulin, die verbreitet in Pflanzen und Tieren vorkommen. Es können auch Wachse wie Bienen- oder Carnaubawachs enthalten sein, die freie Carboxy- und Hydroxy-Gruppen enthalten, welche eine emulgierende Wirkung aufweisen.

Überdies können Wachse im Sinne auch sogenannte Fischer-Tropsch- Wachse sein das heißt Wachse, die durch Fischer-Tropsch-Synthese erhältlich sind.

In einer bevorzugten Ausführungsform ist das Wachs Paraffin. Wenn hier oder anderer Stelle von "Paraffin" die Rede ist, dann ist damit auch Paraffinwachs gemeint. Paraffine sind dem Fachmann grundsätzlich bekannt. Üblicherweise ist Paraffin in Reinform weiß durchscheinend. Es ist unlöslich in Wasser, aber leicht löslich in Benzin, Ether und Chloroform. Paraffine sind typischerweise aus unverzweigten (n-) und verzweigten (iso-)Alkanen zusammengesetzt. Es wird unterschieden zwischen dünnflüssigen Paraffinen (Paraffinum perliquidum), die eine Viskosität von 25 bis 80 mPa·s haben, dickflüssigen Paraffinen (Paraffinum subliquidum), die als ölige Flüssigkeit eine Viskosität von 110 bis 230 mPa·s aufweisen, und Hartparaffinen (Paraffinum solidum), die als feste Masse eine Erstarrungstemperatur von 50 bis 65 °C haben. In Hartparaffinen können die n-Alkane dominieren. Paraffine im Sinne der Erfindungen können auch Mehrkomponentengemische sein, die ganz oder teilweise gesättigte Kohlenwasserstoffe, lineare, verzweigte, cyclische Alkane und/oder Mischungen daraus enthalten.

In einer Ausführungsform enthält das Wachs Paraffinwachs oder besteht hieraus. Die in der Industrie typischerweise verwendeten Paraffinwachse sind Produkte der Erdölraffination und bestehen hauptsächlich aus Mischungen von bei über 35 °C festen n- und iso-Alkanen unterschiedlicher Mengenverhältnisse. Üblicherweise können Paraffinwachse in makro- und mikrokristalline Wachse eingeteilt werden. Makrokristalline Paraffinwachse bestehen vorwiegend aus gesättigten, gradkettigen, unverzweigten Kohlenwasserstoffen (n-Alkane) und besitzen ein Molekulargewicht zwischen 280 und 700 g/mol (mittlere Anzahl der Kohlenstoffatome in der Kette zwischen 20 und etwa 50). Im Unterschied zu den makrokristallinen Paraffinen bestehen die mikrokristallinen Paraffine vorwiegend aus verzweigen Alkanen (iso-Alkane) und gesättigten ringförmigen Kohlenwasserstoffen (Cycloalkane). Der Schmelzbereich ist üblicherweise 60 bis 90 °C. Mikrokristalline Paraffine sind auch durch Hydroisomerisierung von Fischer-Tropsch-Wachsen zugänglich.

Unter Fischer-Tropsch-Wachs wird das durch eine Fischer-Tropsch-Synthese gewonnenes Paraffin verstanden. Die Anzahl der Kohlenstoffatome in der Kette liegt in einem Bereich von 20 bis 100. Der Erstarrungspunkt liegt in einem Bereich von 35 °C bis 105 °C (vgl. auch A. Kühnle in Fette, Seifen, Anstrichmittel 84. Jahrgang, 15 Nr.4, S. 156-162).

In einer Ausführungsform enthält das Wachs ein Weichwachs oder besteht hieraus. Weichwachse können auf unterschiedliche Arten definiert werden. Weichwachse sind typischerweise Produkte der Erdölraffination und weisen Ölanteile größer 20 Gew.-% und Erstarrungspunkte von größer 10 °C auf, insbesondere größer gleich 20 °C. Der enthaltene Öl-Anteil ist bei kleiner gleich 10 °C flüssig. Ein Stoffgemisch enthaltend obigen Ölanteil wird üblicherweise als Wachs bzw. als Weichwachs bezeichnet, wenn es bei größer 10 °C fest ist, insbesondere bei größer 25 °C, beispielsweise von verformbar weich, über knetbar bis brüchig hart ist, und einen Erweichungspunkt unter 65 °C aufweist (jeweils bei Normaldruck, 1013 mbar). Zu den Weichwachsen zählen auch Feststoffgemische fester Paraffine und für sich genommen flüssige Kohlenwasserstoffe (entspricht dem Öl bzw. dem Ölanteil). Als paraffinische Weichwachse können Gemische Erweichungspunkte bis 65 °C aufweisen. Diese enthalten neben den üblichen höher schmelzenden Wachsen (für sich genommen beispielsweise größer 40 °C zu einem Anteil von größer 65 Gew.-%) auch niedermolekulare Kohlenwasserstoffe (Ölanteil), die bei Raumtemperatur (25 °C) flüssig sind. Hierbei können die Weichwachse aus Erdölwachsen, das heißt aus geologischen Quellen, und/oder aus künstlich hergestellten synthetischen Wachsen zugänglich sein bzw. derartige Bestandteile enthalten. Der Gehalt von Wachsen an n-Paraffin, iso-Paraffin und Öl unterliegt Schwankungen, je nach Ursprung des Erdöls und Art des Raffinationsprozesses.

Der Fachmann unterscheidet Weichwachse ("Soft Wax") von Hartwachsen. Weichwachse haben typischerweise eine Dichte zwischen 0,80 und 0,85 g/cm³ und weisen im Durchschnitt (Zahlenmittel) Kohlenwasserstoffe mit mehr als 16 Kohlenstoffatomen auf. Die Weichwachse bestehen hauptsächlich aus n- und iso-Paraffinen sowie bei Raumtemperatur flüssigen Kohlenwasserstoffen (Öl). Das untere Ende der Weichwachse hinsichtlich des Erstarrungspunktes bilden die sogenannten "Footsoile" mit einem Schmelzpunkt bzw. Schmelzbereich von 35 bis 45 °C, die vergleichsweise viel Öl enthalten, und das obere Ende die "Slackwaxe" mit einem Schmelzpunkt von beispielsweise von 35 bis 65 °C. Je nach Herkunft des Wachses kann der Ölanteil bis 35 Gew.-% betragen. Stark ölhaltige Footsoile werden bei der Entölung von "Slackwaxes" erhalten. Die Footsoile können Ölanteile größer 30 Gew.-% aufweisen.

Dieser Ölanteil ist ein weiteres charakteristisches und praxisrelevantes Merkmal von Wachsen. Wachse, die hohe Ölanteile aufweisen, entfalten nur eine schwache Hydrophobierungswirkung, weshalb in der Praxis Wachse mit einem geringen Ölanteil bevorzugt werden. Überraschenderweise wurde in praktischen Versuchen gefunden, dass auch bei einem höheren Ölanteil des zur Hydrophobierung eingesetzten Wachses in der gebrochenen Dispersion, Holzwerkstoffe mit verbesserten Quelleigenschaften erhalten werden konnten. Die Bestimmung des Ölanteils ist dem Fachmann allgemein bekannt. Der Ölanteil wird beispielsweise mittels der Norm ASTM D3235 ("Standard Test Method for Solvent Extractables in Petroleum Waxes") bestimmt. Hierzu löst man den Probenteil in einem Lösemittel (Mischung aus 50% Methylethylketon und 50% Toluol), kühlt die Lösung ab, um das Paraffin abzuscheiden und filtriert. Der Masseanteil an Öl des Filtrats wird nach Verdampfen des Lösungsmittels durch Wägen des Rückstandes bestimmt. "Öl" kann nach dieser Methode auch als Sammelbegriff für die in einer Mischung aus 50% Methylethylketon und 50% Toluol bei Raumtemperatur löslichen Feststoffe (Verdampfungsrückstand) definiert werden.

"Öle" können jedoch auf unterschiedlichste Weise definiert werden. Zum einen werden Öle von Fetten unterschieden. Unter "Öle" und "Fette" können feste, halbfeste oder flüssige, mehr oder weniger viskose Produkte des Pflanzen- oder Tierkörpers sein, die chemisch aus gemischten Triacylglycerolen höherer Fettsäuren mit gerader Anzahl von Kohlenstoffatomen sowie geringen Anteilen von Acyllipiden (beispielsweise Sterolester) und unverseifbaren Anteilen bestehen. Hierbei sind dann Fette die Stoffe, die bei 20 °C fest oder halbfest sind, und Öle die Stoffe, die bei 20 °C flüssig sind. Zum anderen ist "Öl" auch eine Sammelbezeichnung für wasserunlösliche, bei 20 °C flüssige, organische Verbindungen mit relativ niedrigem Dampfdruck, deren gemeinsames Merkmal nicht die übereinstimmende chemische Konstitution, sondern die ähnliche physikalische Konsistenz ist. Öle haben eine relativ hohe Viskosität, sie sind in fast allen organischen Lösemitteln löslich. Öle können ausgewählt sein aus Mineralölen, insbesondere vollsynthetische Öle wie beispielsweise Siliconöle, pflanzliche und/oder tierische fette Öle, ätherische Öle sein. Erfindungsgemäß kann für den Begriff Öl eine oder mehrere dieser Definitionen herangezogen werden.

Die Erfindung betrifft ferner ein Verfahren zur Herstellung eines Holzwerkstoffs umfassend die Schritte:
a) Bereitstellen von Holzpartikeln,
b) Beleimen der Holzpartikel mit einem Bindemittel,
c) Verpressen der beleimten Holzpartikel zu einem Holzwerkstoff,
wobei vor, während oder nach Schritt b) die Holzpartikel und/oder das Bindemittel mit einer gebrochenen Dispersion in Berührung gebracht werden.

Die Erfindung betrifft auch Holzwerkstoffe, das heißt Werkstoffe, die aus Holz bestehen oder Holz enthalten. Gemäß einer Ausführungsform der Erfindung ist der Holzwerkstoff ein Holzspanwerkstoff. Vorzugsweise ist der Holzspanwerkstoff ein OSB oder eine Spanplatte. In einer anderen Ausführungsform der Erfindung ist der Holzwerkstoff ein Holzfaserstoff, insbesondere eine MDF- oder HDF-Platte.

Grundsätzlich lassen sich Holzwerkstoffe in Holzspan- und Holzfaserwerkstoffe unterteilen. Für den Fachmann sind Holzspanwerkstoffe und Holzfaserstoffe zwei grundsätzlich verschiedene Werkstoffkategorien, die zu unterscheiden sind, aber gleichwohl unter den Begriff "Holzwerkstoff" im Sinne der Erfindung fallen. Holzspanwerkstoffe (Spanplatten im weiteren Sinne) bezeichnet eine Produktgruppe im Bereich der Holzwerkstoffe, die aus Holzpartikeln und einem Bindemittel mittels Wärme und Druck hergestellt werden. Beispiele hierfür sind sind Spanplatten, Flachpressplatten, Einschichtplatten, Mehrschichtplatten, leichte Flachpressplatten, Strangpressplatten, Strangpressröhrenplatten (ET - Extruded Tubular), Strangpressvollplatten (ES -Extruded Solid), kunststoffbeschichtete dekorative Flachpressplatten (MFB - Melamin Faced Board), Spanholzformteile oder Grobspanplatten (OSB - Oriented Strand Board). Die Einteilung der Spanplatten kann nach DIN EN 312 erfolgen, wobei sich die Spanplatten in Festigkeit und Feuchtebeständigkeit unterscheiden können. OSB können gemäß ihrer Verwendung nach EN 300 eingeteilt werden. Solche Holzspanwerkstoffe können beispielsweise zu Laminaten, Bodenbelägen, Arbeitsplatten, Tischplatten, Paletten und/oder Holzformteilen weiterverarbeitet werden.

Zu den Holzfaserwerkstoffen gehören ferner auch Faserplatten, wie beispielsweise die mitteldichten (MDF) und hochdichten (HDF) Faserplatten. Im Gegensatz zu den Holzspanwerkstoffen, wird zur Herstellung der Faserplatten das verwendete Holz bis hin zur Holzfaser, Faserbündeln oder Faserbruchstücken aufgeschlossen. Der strukturelle Zusammenhalt der Faserplatten beruht im Wesentlichen auf der Verfilzung der Holzfasern und ihren holzeigenen Bindekräften, es können aber auch Klebstoffe als Bindemittel eingesetzt werden. Die Faser wird aus verholztem Pflanzenmaterial erzeugt. Dies erfolgt durch Hacken des Rohmaterials, anschließendes Dämpfen, Kochen und chemisches und/oder mechanisches Aufschließen bis hin zur Einzelfaser, Faserbündel oder Faserbruchstücken. Bei dem Herstellungsverfahren unterscheidet der Fachmann zwischen dem Nassverfahren (Sedimentieren der Fasern aus einer wässrigen Fasersuspension zum Vlies) und dem Trockenverfahren (trockene Faser werden mechanisch oder pneumatisch zu einem Vlies verdichtet). Werden die Holzfaserplatten im Nassverfahren hergestellt, unterscheidet man poröse, mittelharte und harte Faserplatten. Werden die Holzfaserplatten im Trockenverfahren hergestellt, unterscheidet man mitteldichte und hochdichte Faserplatten, außerdem gehören in diese Gruppe auch gipsgebundenen Faserplatten. Die entstandenen Matten werden anschließend verpresst.

Vorzugsweise besteht der Holzwerkstoff, beziehungsweise dessen Vor- oder Zwischenprodukt, im Wesentlichen aus dem mit der gebrochenen Dispersion hydrophobierten lignocellulosehaltigem Material und mindestens einem Bindemittel. "Im Wesentlichen" bedeutet hierbei größer gleich 90 Gew.-%, 95 Gew.-%, 99 Gew.-% oder 99,9 Gew.-%, jeweils bezogen auf das Gesamtgewicht des Holzwerkstoffs.

Es ist jedoch auch möglich, dass der Holzwerkstoff, beziehungsweise dessen Vor- oder Zwischenprodukt, einen Zusatzstoff und/oder weitere Stoffe enthält. Beispielsweise können Netz- und/oder Trennmittel für einen verbesserten Pressvorgang zugesetzt werden. Weiterhin können Pilzschutzmittel oder Feuerschutzmittel zugesetzt werden.

Die im Schritt a) eingesetzten Holzpartikel sind vorzugweise ausgewählt aus feinteiligem Holz, Holzfasern, Holzflakes, Holzstrands, Holzwafer, Holzspänen, Hackschnitzeln, Holzpartikel. Besonders für das erfindungsgemäße Verfahren geeignet sind Holzspäne, Holzfasern und Holzstrands. Holzpartikel im Sinne der Erfindung sind jegliche Holzpartikel, die für die Herstellung von Holzwerkstoffen eingesetzt werden können.

Die im Verfahren einsetzbaren Holzpartikel können jegliche Zerkleinerungsprodukte von Lignocellulose enthaltenden Materialien sein. Wenn hier von "lignocellulosehaltigem Material" die Rede ist, ist damit pflanzliches Material gemeint, das Lignocellulose enthält. Lignocellulose im Sinne der Erfindung enthält Cellulose und/oder Hemicellulose sowie Lignin.

"Cellulose" ist ein unverzweigtes Polysaccharid, das aus mehreren hundert bis zehntausend Cellobiose-Einheiten besteht. Diese Cellobiose-Einheiten bestehen wiederum aus zwei Molekülen Glucose, die über eine β-1,4-glykosidische Bindung verknüpft sind.

"Hemicellulose" ist eine Sammelbezeichnung für verschiedene Bestandteile pflanzlicher Zellwände. Bei den Hemicellulosen handelt sich um verzweigte Polysaccharide mit einer geringeren Kettenlänge - üblicherweise weniger als 500 Zuckereinheiten - welche aus verschiedenen Zucker-Monomeren aufgebaut sind. Hemicellulose ist im Wesentlichen aus verschiedenen Zucker-Monomeren, wie beispielsweise Glucose, Xylose, Arabinose, Galactose und Mannose, aufgebaut, wobei die Zucker Acetyl- sowie Methylsubstituierte Gruppen aufweisen können. Sie besitzen eine zufällige, amorphe Struktur und sind gut hydrolysierbar. Xylose bzw. Arabinose bestehen zum überwiegenden Teil aus Zucker-Monomeren mit fünf Kohlenstoffatomen (Pentosen). Mannose bzw. Galactose bestehen hauptsächlich aus Zucker-Monomeren mit sechs Kohlenstoffatomen (Hexosen).

"Lignine" sind amorphe, unregelmäßig verzweigte aromatische Makromoleküle, welche in der Natur als Bestandteil von Zellwänden vorkommen und dort die Verholzung (Lignifizierung) der Zelle bewirken. Sie sind aus substituierten Phenylpropanol-Einheiten aufgebaut, zeigen einen lipophilen Charakter und sind bei Zimmertemperatur in neutralen Lösemitteln, wie beispielsweise Wasser, unlöslich. Vorläufersubstanzen von Lignin sind beispielsweise p-Coumaryl-Alkohol, Coniferyl-Alkohol und Sinapyl-Alkohol. Die Molmassen von Lignin liegen üblicherweise zwischen 10000 und 20000 g/mol.

In einer Ausführungsform enthält das lignocellulosehaltige Material Holzpartikel oder besteht daraus. In einer weiteren Ausführungsform enthält das lignocellulosehaltige Material Lignin enthaltende Pflanzen, Pflanzenteile und/oder Abfälle oder besteht daraus.

In Schritt b) des erfindungsgemäßen Verfahrens werden die Holzpartikel mit einem Bindemittel beleimt. Wenn hier von "Beleimen" die Rede ist, dann kann darunter das ganz oder teilweise Benetzen mit einer Zusammensetzung, die ein Bindemittel enthält, verstanden werden. Derartige Zusammensetzungen werden vom Fachmann insbesondere auch als "Leimflotte" bezeichnet. Beleimen kann insbesondere auch das gleichmäßige Verteilen der bindemittelhaltigen Zusammensetzung auf den Holzpartikeln bedeuten. Das Auftragen der bindemittelhaltigen Zusammensetzung kann beispielsweise durch Tränken oder Aufsprühen, insbesondere in einer Blowline, erfolgen. Das Beleimen kann alternativ oder zusätzlich in einer Beleimtrommel erfolgen. Insbesondere kann das Beleimen durch Düsen, z.B. mittels einer Zweistoffdüse, erfolgen.

Die Menge des beim Beleimen (Schritt b) eingesetzten Bindemittels beträgt vorzugsweise 0,1 bis 20 Gew.-%, insbesondere 1 bis 16 Gew.-%, noch bevorzugter 4 bis 14 Gew.-%, jeweils bezogen auf das Holztrockengewicht (Festharz/atro). Für viele Anwendungen ist es besonders praxisgerecht, wenn das Bindemittel in einer Menge von 0,1 bis 15 Gew.-%, jeweils bezogen auf das Holztrockengewicht (Festharz/atro) eingesetzt wird.

Bindemittel für die Herstellung von Holzwerkstoffen im Sinne der Erfindung können einen oder mehrere Bestandteile aufweisen. In einer Ausführungsform der Erfindung enthält das Bindemittel ein aminoplastisches Bindemittel oder besteht daraus. In einer anderen Ausführungsform enthält das Bindemittel ein Isocyanat oder besteht daraus. In einer weiteren Ausführungsform enthält das Bindemittel polymeres Diphenylmethandiisocyanat (PMDI) oder besteht daraus. Insbesondere kann polymeres Diphenylmethandiisocyanat (PMDI) in einer Menge von 0,05 bis 50 Gew.-%, bevorzugt von 0,1 bis 25Gew.-%, insbesondere bevorzugt von 1 bis 10 Gew.-%, jeweils bezogen auf das Gesamtgewicht des Bindemittels, enthalten sein.

Grundsätzlich ist das erfindungsgemäße Verfahren oder eine seiner Ausführungsformen für eine Vielzahl von Bindemittel-Holzpartikel-Kombinationen geeignet. Es kann mindestens ein Aminoplastharz als Bindemittel eingesetzt werden. Aminoplastisches Bindemittel bzw. Aminoplastharze haben sich als besonders praxisgerecht im Zusammenhang mit der Herstellung von Holzwerkstoffen erwiesen. Dabei kann ein einzelnes Aminoplastharz oder Mischung verschiedener Aminoplastharzen verwendet werden. Aminoplastharze sind dem Fachmann bekannt und sind beispielsweise in "Ullmanns Enzyklopädie der technischen Chemie", 4. Auflage, Band 7, S. 403 ff. beschrieben. Wenn hier oder an anderer Stelle von Aminoplastzharzen die Rede ist, dann sind damit auch aminoplastisches Bindemittel oder Aminoplastharzzusammensetzungen gemeint. Aminoplastharze und/oder Aminoplastharzzusammensetzungen können auch Wasser enthalten. Aminoplastharze werden durch Kondensation einer Amino-, Imino- oder Amidgruppen enthaltenden Komponente mit einer Carbonylverbindung erhalten. Häufige Ausgangsmaterialien für Aminoplastharze sind beispielsweise Harnstoff und/oder Melamin (als Aminogruppen enthaltende Komponente) und Formaldehyd (als Carbonylverbindung). In letzterem Fall wird die Aminogruppen-enthaltende Komponente zumeist in einem ersten Schritt mit der Carbonylverbindung bis zu einem bestimmten Grad vorkondensiert. Je nachdem, ob im ersten Schritt beispielsweise nur Melamin oder nur Harnstoff als Aminogruppen enthaltende Komponente eingesetzt wird, erhält man ein sogenanntes Melaminharz oder ein Harnstoffharz. Derartige Melamin- und/oder Harnstoffharze können insbesondere die Hauptbestandteile von Aminoplastharzen bilden. In einem zweiten Schritt, oft auch als Aushärtung bezeichnet, kann das Aminoplastharz dann durchgehend vernetzt werden. Harze, die aus Harnstoff und Formaldehyd gebildet werden, bezeichnet man auch als Harnstoffformaldehydharze. Harze, die aus Melamin und Formaldehyd gebildet werden, bezeichnet man als Melaminformaldehydharz. Beispiele für Aminoplastharze sind Harnstoff-Formaldehyd-Harze (UF), Melamin verstärkte Harnstoff-Formaldehyd-Harze (MUF), Melamin-Harnstoff-Phenol-Formaldehyd-Harze (MUPF) oder Mischungen hiervon.

Weitere gebräuchliche Bindemittel zur Herstellung von Holzwerkstoffen im Sinne der Erfindung enthalten oder bestehen aus Kunstharzen, insbesondere Phenoplaste, Vinylacetate, Isocyanate, Epoxidharze und/oder Acrylharze. Kunstharze sind dem Fachmann grundsätzlich bekannt. Kunstharze sind beispielsweise in Römpps ChemieLexikon, 7. Auflage, Frankh'sche Verlagshandlung Stuttgart, 1973, Seite 1893 beschrieben.

In dem erfindungsgemäßen Verfahren werden die Holzpartikel und/oder das Bindemittel vor, während oder nach Schritt b) mit der erfindungsgemäßen gebrochenen Dispersion in Berührung gebracht. Das In-Berührung-Bringen der gebrochenen Dispersion mit den Holzpartikeln und/oder dem Bindemittel kann durch ganzes oder teilweises Benetzen erfolgen. Das In-Berührung-Bringen mit der gebrochenen Dispersion kann auch das gleichmäßige Verteilen der gebrochenen Dispersion auf den Holzpartikeln und/oder dem Bindemittel sein. Das In-Berührung Bringen mit der gebrochenen Dispersion kann insbesondere durch Tränken oder Aufsprühen, insbesondere in einer Blowline, erfolgen.

In einer Ausführungsform erfolgt das Aufsprühen durch eine Düse, Düsensyteme oder Kombinationen davon. Das Aufsprühen der gebrochenen Dispersion und/oder des Bindemittels kann gleichzeitig oder nacheinander, insbesondere durch örtlich und/oder zeitlich hintereinander geschaltete Düsen, erfolgen. Hierbei kann zuerst das Bindemittel und dann die gebrochene Dispersion oder erst die gebrochene Dispersion und dann das Bindemittel aufgesprüht werden. In einer bevorzugten Ausführungsform werden die Holzpartikel erst beleimt und dann mit der gebrochenen Dispersion in Berührung gebracht.

In der Praxis hat es sich bezüglich der Stabilität der gebrochenen Dispersion als vorteilhaft erwiesen, wenn die gebrochene Dispersion erst kurz vor ihrer Anwendung bzw. kurz vor dem In-Berührung-Bringen mit dem Bindemittel und/oder den Holzpartikeln gemischt wird. In einer Ausführungsform erfolgt das Mischen der wachshaltigen Dispersion und des Demulgators zur Herstellung der gebrochenen Dispersion unmittelbar vor dem In-Berührung-Bringen mit den Holzpartikeln und/oder dem Bindemittel, wobei "unmittelbar vor" einen Zeitraum von weniger als 5 Minuten, bevorzugt von weniger als 1 Minute und insbesondere bevorzugt von weniger als 10 Sekunden vor dem In-Berührung-Bringen bedeutet.

Das In-Berührung-Bringen, das heißt das Mischen, der wachshaltigen Dispersion mit dem Demulgator kann auf unterschiedliche Arten erfolgen. Wenn hier oder anderer Stelle von "Mischen" die Rede ist, dann ist damit das gänzliche oder teilweise In-Berührung-Bringen der wachshaltigen Dispersion mit dem Demulgator gemeint.

In einer Ausführungsform erfolgt das Mischen von wachshaltiger Dispersion und Demulgator zur Herstellung der gebrochenen Dispersion in einem getrennten Arbeitsschritt vor der Zugabe zu den Holzpartikeln und/oder dem Bindemittel. Das Mischen in einem getrennten Arbeitsschritt kann beispielsweise in einer Mischvorrichtung, insbesondere einem Statikmischer, erfolgen.

In einer anderen Ausführungsform erfolgt das Mischen von wachshaltiger Dispersion und Demulgator zur Herstellung der gebrochenen Dispersion durch gleichzeitige Zugabe von wachshaltiger Dispersion und Demulgator zu den Holzpartikeln und/oder dem Bindemittel. Dies bedeutet, dass Demulgator und wachshaltige Dispersion gleichzeitig zugeführt bzw. zugeleitet werden, und miteinander teilweise oder gänzlich in Berührung gebracht werden, wobei sich die gebrochene Dispersion ganz oder teilweise bildet, und dann diese ganz oder teilweise gebrochene Dispersion mit den Holzpartikeln und/oder dem Bindemittel in Berührung gebracht wird. Dieses gleichzeitige Zuführen bzw. Zuleiten erfolgt inbesondere durch einzelne Düsen oder Zweidüsensyteme. Wenn hier von "gleichzeitig" die Rede ist, dann ist damit auch zeitlich und/oder örtlich hintereinandergeschaltete Zugabe der wachshaltigen Dispersion und des Demulgators gemeint, bei der die wachshaltige Dispersion und der Demulgator mindestens teilweise miteinander in Berührung gebracht werden, bevor die mindestens teilweise Mischung aus wachshaltiger Dispersion und Demulgator auf die Holzpartikel und/oder das Bindemittel trifft.

In einer Ausführungsform des erfindungsgemäßen Verfahrens beträgt die Konzentration der eingesetzten gebrochenen Paraffindispersion weniger als 4 Gew.-%, weniger als 3 Gew.-% oder weniger als 1 oder 2 Gew.% (jeweils fest/atro), jeweils bezogen auf das Gesamtgewicht des lignocellulosehaltigen Materials (z.B. der Holzpartikel).

In Schritt c) des erfindungsgemäßen Verfahrens werden die beleimten Holzpartikel zu einem Holzwerkstoff verpresst. Grundsätzlich sind dem Fachmann verschiedene Methoden bekannt, um Holzspanwerkstoffe durch Verpressen herzustellen. Vorzugsweise handelt es sich bei Schritt c) um eine Heißverpressung. Optimale Ergebnisse können erzielt werden, wenn der Pressfaktor beim Heißpressen von 2 bis 10 s/mm, bevorzugt von 3 bis 6 s/mm, beträgt. Unter Pressfaktor wird hier insbesondere die Verweilzeit des lignocellulosehaltigen Holzspanwerkstoffs in Sekunden je Millimeter Dicke oder Stärke des fertigen gepressten lignocellulosehaltigen Holzspanwerkstoffs in der Presse verstanden.

Geeignete Temperaturen für das Verpressen in Schritt c) des erfindungsgemäßen Verfahrens oder einer seiner Ausführungsformen sind Temperaturen von 150 °C bis 250 °C, bevorzugt von 160 °C bis 240 °C, insbesondere bevorzugt von 180 °C bis 230 °C. Bei Temperaturen in diesen Bereichen kann das Verfahren besonders wirtschaftlich durchgeführt werden.

Aus ökonomischen und verfahrenstechnischen Gründen hat es sich als vorteilhaft erwiesen, wenn beim Verpressen ein spezifischer Pressdruck (aktiver Druck auf der Plattenoberfläche) von 50 bis 300 N/cm², verwendet wird. Derartige Drücke stellen eine besonders gute Verklebung der lignocellulosehaltigen Partikel miteinander sicher. Zudem kann mit einem solchen Pressdruck eine hohe Festigkeit der lignocellulosehaltigen Holzspanwerkstoffe erreicht werden.

Die Erfindung betrifft auch die Verwendung der erfindungsgemäßen gebrochenen Dispersion zur Hydrophobierung von lignocellulosehaltigem Material. Die Erfindung betrifft ferner die Verwendung einer der oben beschriebenen Ausführungsformen der erfindungsgemäßen gebrochenen Dispersion zur Hydrophobierung von lignocellulosehaltigem Material.

Ein weiterer Gegenstand der Erfindung ist die Verwendung einer polyfunktionalen Verbindung als Demulgator zum Brechen einer wachshaltigen Dispersion, welche folgende Komponenten enthält:
i) mindestens eine wässrige Phase als kontinuierliche Phase,
ii) mindestens eine disperse Phase enthaltend Wachs, und
iii) mindestens einen Emulgator.

Es gilt das obenstehende zu diesen Begriffen Erläuterte. In einer Ausführungsform kann ein Polyisocyanat, inbesondere polymeres Diphenylmethandiisocyanat (PMDI), als Demulgator zum Brechen einer wachshaltigen Dispersion verwendet werden.

Ein weiterer Gegenstand der Erfindung ist ein Zweikomponentensystem, ein sogenanntes "kit-of-parts". Dieses erfindungsgemäße Zweikomponentensystem enthält mindestens zwei Komponenten A und B:
A) eine wachshaltige Dispersion enthaltend
   i) mindestens eine wässrige Phase als kontinuierliche Phase,
   ii) mindestens eine disperse Phase enthaltend Wachs, und
   iii) mindestens einen Emulgator,
B) einen Demulgator zum Brechen der wachshaltigen Dispersion.

Für die Komponenten A und/oder B des Zweikomponentensytems gilt das oben bereits Gesagte. Bei dem vorliegenden erfindungsgemäßen Zweikomponentensystem liegen die Komponenten derart vor, dass sie nicht miteinander in Berührung stehen. Werden diese Komponenten A und B miteinander in Berührung gebracht, kann so eine gebrochene Dispersion im Sinne der Erfindung erhalten werden.

Bei dem Zweikomponentensystem im Sinne der Erfindung, liegen die Komponenten A und B räumlich voneinander getrennt vor. In einer Ausführungsform liegen die Komponenten A und B in jeweils unterschiedlichen separaten Behältnissen vor. In einer anderen Ausführungsform liegen die Komponenten in einem gemeinsamen Behältnis vor, wobei die Komponenten A und B in diesem Behältnis jeweils räumlich voneinander getrennt vorliegen. Erst wenn die gebrochene Dispersion erhalten bzw. bereitgestellt werden soll, werden die Komponenten A und B miteinander in Berührung gebracht. Dies hat sich als besonders vorteilhaft und praxisrelevant erwiesen, da so die Lagerstabilität der wachshaltigen Emulsion durch den darin enthaltenen Emulgator ausgenutzt werden kann. Dessen im fertigen Holzwerkstoff oftmals störende, die Wasseraufnahme vermittelnde Eigenschaften können durch Zugabe des Demulgators weitestgehend aufgehoben werden, was wiederrum zur Verbesserung der Quelleigenschaften des Holzwerksstoffs bzw. des darin enthaltenen lignocellulosehaltigen Materials beiträgt. Überdies kann durch das Zweikomponentensystem die Dosierung der wachshaltigen Dispersion A) und des Demulgators B) an die jeweiligen Herstellungsgegebenheiten angepasst werden.

Besondere Ausführungsformen der Erfindung werden nachfolgend an Hand von Figuren beispielhaft erläutert.
- Fig. 1: zeigt eine Dispersion in einem Behältnis (1). Eine disperse Phase (3) ist heterodispers in der kontinuierlichen Phase (2) verteilt.
- Fig. 2: zeigt eine mehrfache Dispersion in einem Behältnis (1). Bei der mehrfachen Dispersion liegt eine weitere disperse Phase (4) in der dispersen Phase (3), die von der kontinuierlichen Phase (2) umgeben ist, vor. Hierbei ist die die disperse Phase (3) für die disperse Phase (4) die kontinuierliche Phase.
- Fig. 3a: zeigt eine gebrochene Dispersion in einem Behältnis (1), die eine kontinuierliche (2) und eine flüssige disperse (3) Phase enthält. Die disperse Phase (3) hat sich teilweise zu größeren Partikeln zusammengelagert bzw. mehrere Partikel der dispersen Phase liegen zusammengeballt vor. Die gezeigte gebrochene Dispersion kann erhalten werden, indem der Dispersion aus Fig, 1 ein erfindungsgemäßer Demulgator zugesetzt wird.
- Fig. 3b: zeigt eine gebrochene mehrfache Dispersion in einem Behältnis (1), die eine kontinuierliche (2) und eine flüssige disperse (3) Phase enthält. Die disperse Phase (3) hat sich teilweise zu größeren Partikeln zusammengelagert bzw. mehrere Partikel der dispersen Phase haben sich zusammengeballt. In die disperse Phase (3) ist eine weitere disperse Phase (4) dispergiert. Hierbei ist die die disperse Phase (3) für die disperse Phase (4) die kontinuierliche Phase. Die gezeigte gebrochene Dispersion kann erhalten werden, indem der Dispersion aus Fig, 2 ein erfindungsgemäßer Demulgator zugesetzt wird.

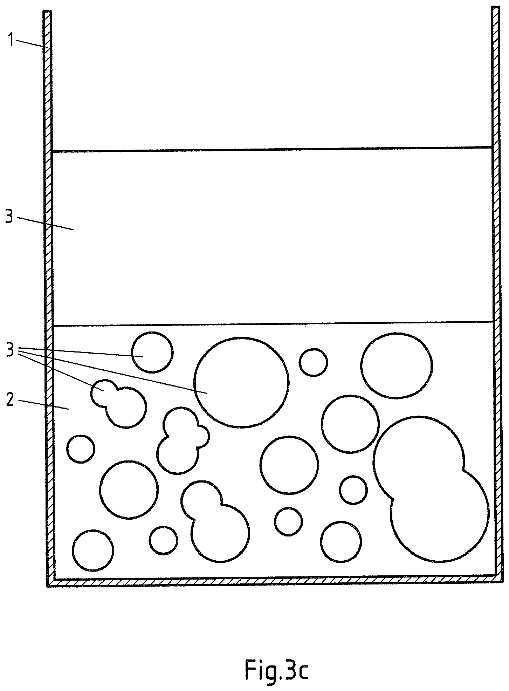

- Fig. 3c: zeigt eine gebrochene Dispersion in einem Behältnis (1), die eine kontinuierliche (2) und eine flüssige disperse (3) Phase enthält. Die disperse Phase (3) hat sich teilweise zu größeren Partikeln zusammengelagert bzw. mehrere Partikel der dispersen Phase haben sich zusammengeballt. Ein Teil der dispersen Phase (3) hat sich oberhalb der kontinuierlichen Phase (2) abgesetzt. Die gezeigte gebrochene Dispersion kann erhalten werden, indem der Dispersion aus Fig, 1 ein erfindungsgemäßer Demulgator zugesetzt wird.

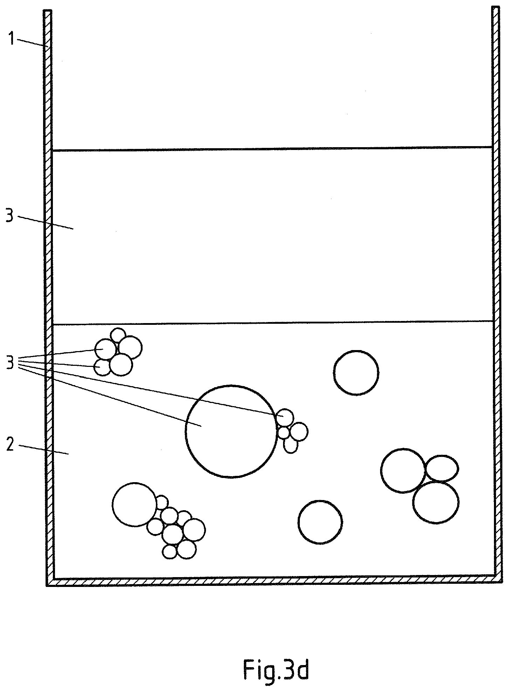

- Fig. 3d: zeigt eine gebrochene Dispersion in einem Behältnis (1), die eine flüssige kontinuierliche Phase (2) und eine flüssige disperse Phase (3) enthält. Die Phasentrennung ist teilweise erfolgt. Die disperse Phase (3) hat sich teilweise zur größeren Partikeln zusammengeballt. Ein Teil der dispersen Phase (3) hat sich oberhalb der kontinuierlichen Phase (2) abgesetzt. Die gezeigte gebrochene Dispersion kann erhalten werden, indem der Dispersion aus Fig, 1 ein erfindungsgemäßer Demulgator zugesetzt wird.
- Fig. 4: zeigt eine weitere gebrochene Dispersion. Die Phasentrennung ist vollständig in die wässrige (2) und wachshaltige Phase (3) erfolgt. Die gezeigte gebrochene Dispersion kann erhalten werden, indem der Dispersion aus Fig, 1 ein erfindungsgemäßer Demulgator zugesetzt wird.

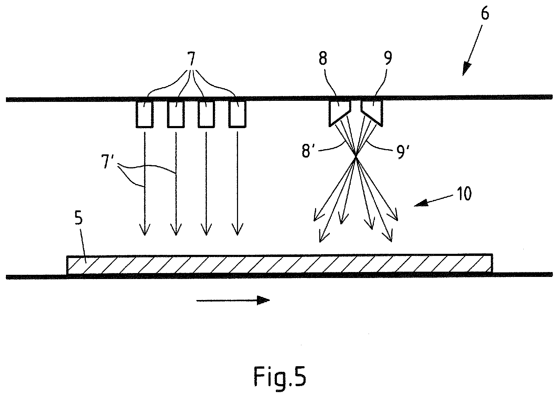

- Fig. 5: zeigt eine Ausführungsform der Beleimung und des Aufsprühens der gebrochenen Dispersion (10) auf lignocellulosehaltiges Material (5) in einer Beleimvorrichtung (6). Aus den Düsen (7) wird das Bindemittel (7') auf das lignocellulosehaltige Material (5) gesprüht. Danach werden mittels einer Düse (8) und einer weiteren Düse (9) die wachshaltige Dispersion (8') und der Demulgator (9') so eingesprüht, dass die wachshaltige Dispersion (8') und der Demulgator (9') In Berührung gebracht werden, sodass die gebrochene Dispersion (10) entsteht. Diese gebrochene Dispersion (10) kommt dann mit dem beleimten lignocellulosehaltigen Material (5) In-Berührung. Wachshaltige Dispersion (8') und Demulgator (9') können über getrennte Düsen (8, 9), über eine gemeinsame Düse (insbesondere als vorgefertigte Mischung) sowie über eine Zweistoffdüse zugegeben werden. Andere Reihenfolgen der Auftragung von Bindemittel (7'), wachshaltiger Dispersion (8') und der Demulgator (9') sind ebenfalls möglich.

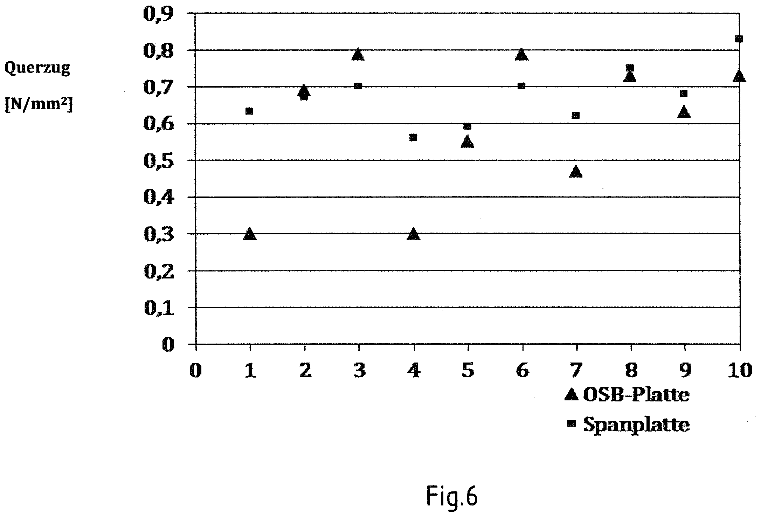

- Fig. 6: zeigt graphisch die Ergebnisse der Versuche zur Querzugfestigkeit der gemäß den Ausführungsbeispielen hergestellten OSB und Spanplatten

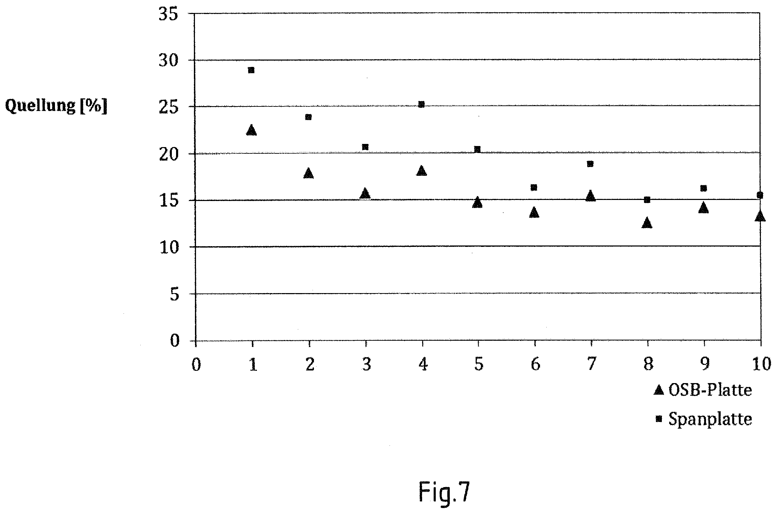

- Fig. 7: zeigt graphisch die Ergebnisse der Versuche zur Quellung der gemäß den Ausführungsbeispielen hergestellten OSB und Spanplatten

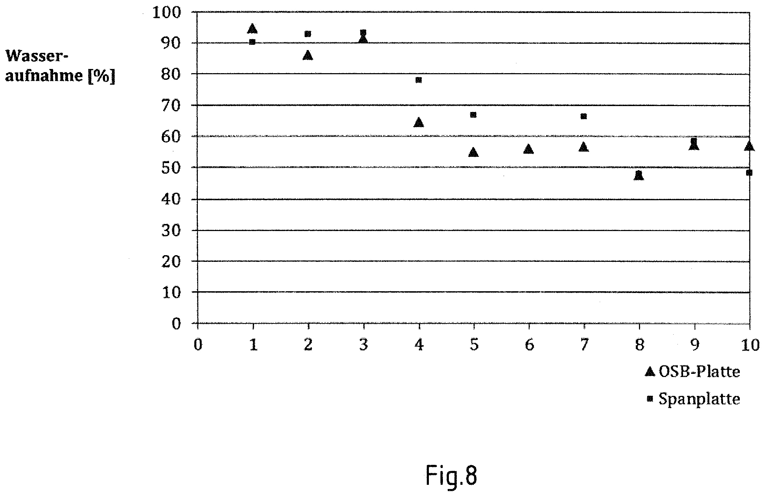

- Fig. 8: zeigt graphisch die Ergebnisse der Wasseraufnahme der gemäß den Ausführungsbeispielen hergestellten OSB und Spanplatten

### Ausführungsbeispiele

### Versuchsdurchführung:

Es wurden jeweils zwei OSB und zwei Spanplatten nach den in Tabelle 1 aufgelisteten Zusammensetzungen hergestellt. Zur Hydrophobierung wurde eine kommerziell erhältliche Paraffinwachsemulsion (Bomul 50 SYN wax emulsion, Hersteller: BOMUL Producer, Supplier and Commercial Ltd. Nyírbogdány, Ungarn, Gyártelep) eingesetzt. Es wurden ein UF-Leim, ein Härter, PMDI als Demulgator und die wachshaltige Dispersion wie folgt eingesetzt:

**Tab. 1: Zusammensetzungen der Platten, FH = Festharz, PMDI = Diphenylmethandiisocyanat, t = Tonnen, atro = absolut trocken, bezogen auf den Holzanteil**

| Beispiel | UF-Leim [% FH/t atro] | Härter [% fest/FH] | PMDI [% FH/tatro] | Wachshaltige Dispersion [fest/atro] |
|---|---|---|---|---|
| 1 (Referenz) | 7% | 3% | Keines | Keine |
| 2 (Referenz) | 7% | 3% | 0,25 % | Keine |
| 3 (Referenz) | 7% | 3% | 0,5 % | Keine |
| 4 (Referenz) | 7% | 3% | Keines | 1 % |
| 5 | 7% | 3% | 0,25 % | 1% |
| 6 | 7% | 3% | 0,5 % | 1% |
| 7 | 7% | 3% | 0,25 % | 1% |
| 8 | 7% | 3% | 0,5 % | 1% |
| 9 | 7% | 3% | 0,25 % | 1% |
| 10 | 7% | 3% | 0,5 % | 1% |

Die OSB bzw. die Spanplatten der in Tabelle 1 dargestellten Zusammensetzungen, wurden wie folgt hergestellt:
Zur Herstellung der Span- bzw. OSB-Platten wurde zuerst das benötigte Spanmaterial in den Pflugschermischer gegeben. Die Beleimung bzw. Additivzugabe erfolgt hierbei über eine Zweistoffdüse.

Alle Laborplatten wurden mit derselben Beleimfeuchte hergestellt.

Bei allen Platten wurde zuerst das benötigte Wasser zugefügt.

Für die Referenzplatte 1 wurde der UF-Leim mit dem Härter vermischt und über die Düse zugegeben.

Bei den Referenzplatten 2 und 3 wurde die UF-Härter-Mischung um die angegebenen PMDI-Mengen ergänzt.

Für die Referenzplatte 4 wurde zuerst die UF-Härter-Mischung hergestellt und zugegeben und anschließend die wachshaltige Dispersion. Es wurde so ein "konventionell" hydrophobierter Holzwerkstoff erhalten.

Bei den Platten 5 und 6 wurde wieder zuerst der UF-Leim mit dem Härter und dem PMDI vermengt und zu den Spänen gegeben und anschließend die wachshaltige Dispersion zugefügt.

Bei den Platten 7 und 8 wurde das PMDI zur Emulsion gemischt. Zur Herstellung wurde wieder zuerst die UF-Härter-Mischung zugegeben und anschließend die wachshaltige Dispersion mit dem PMDI.

Für die Herstellung der Platten 9 und 10 wurde die PMDI-Menge auf UF-Leim und Emulsion aufgeteilt, wobei wieder zuerst die UF-Härter-PMDI-Mischung und anschließend die Emulsion-PMDI-Mischung zugegeben wurde.

Die Pressung erfolgte bei einem Pressdruck von max. 150 bar, einem Pressfaktor von 9,3 Sekunden/mm und einer Gesamtpressdauer von 160 Sekunden. Es wurden 14 mm dicke Platten mit einer Zieldichte von 600 kg/m³ hergestellt. Danach wurden die Querzugfestigkeit, die Quellung und die Wasseraufnahme wie folgt ermittelt:

Die Querzugfestigkeit der hergestellten OSB und Spanplatten wurde mittels der EN 319 (für bis zu 10 kN) an der Zwick-Roell Zmart.Pro ermittelt. Die Quellung und Wasseraufnahme wurden, nach Verbleib der Proben für 24 Stunden im Quellbecken, gemessen.

Die Ergebnisse sind in den Diagrammen 1 bis 3 und Tabellen 2 und 3 dargestellt. Jeder Datenpunkt stellt den Mittelwert der Ergebnisse der jeweils zwei hergestellten Platten pro Plattentyp dar.

**Tab. 2: Querzugfestigkeit, Wasseraufnahme und Quellung der OSB-Platten**

| | **OSB-Platte** | | |
|---|---|---|---|
| **Platte** | **Querzug [N/mm²]** | **Quellung [%]** | **Wasseraufnahme [%]** |
| **1** | 0,3 | 22,5 | 94,7 |
| **2** | 0,69 | 17,9 | 86,1 |
| **3** | 0,79 | 15,7 | 91,4 |
| **4** | 0,3 | 18,1 | 64,4 |
| **5** | 0,55 | 14,7 | 55,1 |
| **6** | 0,79 | 13,7 | 56,1 |
| **7** | 0,47 | 15,4 | 56,8 |
| **8** | 0,73 | 12,5 | 47,5 |
| **9** | 0,63 | 14,2 | 57,4 |
| **10** | 0,73 | 13,3 | 57,2 |

**Tab. 3: Querzugfestigkeit, Wasseraufnahme und Quellung der Spanplatten**

| | **OSB-Platte** | | |
|---|---|---|---|
| **Platte** | **Querzug [N/mm²]** | **Quellung [%]** | **Wasseraufnahme [%]** |
| **1** | 0,63 | 28,8 | 90,1 |
| **2** | 0,67 | 23,8 | 92,8 |
| **3** | 0,7 | 20,6 | 93,1 |
| **4** | 0,56 | 25,1 | 77,8 |
| **5** | 0,59 | 20,3 | 66,7 |
| **6** | 0,7 | 16,2 | 55,4 |
| **7** | 0,62 | 18,8 | 66,2 |
| **8** | 0,75 | 14,9 | 47,7 |
| **9** | 0,68 | 16,1 | 58,6 |
| **10** | 0,83 | 15,4 | 48,2 |

### Ergebnisse:

Im Vergleich zu den Holzplatten aus Beispiel 1 (Referenzplatten), die keine wachshaltige Dispersion und kein PMDI enthielten, zeigten die Versuche, dass bei beiden Plattentypen die alleinige Zugabe von wachshaltiger Dispersion (Beispiel 4) eine deutliche Verschlechterung der Querzugfestigkeit, aber eine Erniedrigung der Quellung sowie der Wasseraufnahme bewirkte.

Die alleinige Zugabe von PMDI (Beispiele 2 und 3) führte hingegen im Vergleich zur Beispiel 1 zu einer Verbesserung der Querzugfestigkeit und leichter Erniedrigung der Quellung bei annähernd gleicher Wasseraufnahme.

Die erfindungsgemäße Behandlung mit der Mischung aus wachshaltiger Dispersion und PMDI (Beispiele 5 bis 10) führte im Vergleich zu den Platten aus Beispiel 1 zu einer deutlichen Verbesserung der Querzugfestigkeit und Erniedrigung der Quellung sowie der Wasseraufnahme. Auch im Vergleich zu den Beispielen 2, 3 und 4 zeigten beide Plattentypen der Beispielen 5 bis 10 eine geringere Quellung und Wasseraufnahme.

Bezüglich der Querzugfestigkeit, führte ein PMDI-Anteil von 0,5 % (Beispiele 6, 8, 10) zu einem Anstieg der Querzugfestigkeit im Vergleich zu der Zugabe von 0,25 % PMDI (Beispiele 5, 7, 9) oder keinem PMDI (Beispiele 1, 4).

Bezüglich der der Quelleigenschaften und der Wasseraufnahme zeigten beide Plattentypen der Beispiele 5, 7, 9 sowie der Beispiele 6, 8, 10 vergleichbar gute Ergebnisse. Es ergab sich insgesamt eine niedrigere Quellung für die OSB.

Damit zeigte sich insgesamt eine deutliche Verbesserung der Quelleigenschaften durch die Behandlung des Holzmaterials mit einer gebrochenen Dispersion (erhältlich durch Mischen von wachshaltiger Dispersion und PMDI) im Vergleich zu den Holzplatten der Vergleichsbeispiele 1 bis 4. Damit konnte insgesamt ein hydrophobierter Holzwerkstoff erhalten werden, der bessere Quellungseigenschaften aufweist, als "konventionell" hydrophobierte Holzwerkstoffe (vgl. Beispiele 2 und 3).

Gegenstand der Anmeldung sind auch die in den nachfolgenden Sätzen 1 bis 17 wiedergegebenen Erfindungsgedanken:
1. Gebrochene Dispersion zur Hydrophobierung von lignocellulosehaltigem Material, wobei die gebrochene Dispersion erhältlich ist durch Mischen von mindestens
   A) einer wachshaltigen Dispersion enthaltend folgende Komponenten:
      i) mindestens eine wässrige Phase als kontinuierliche Phase,
      ii) mindestens eine disperse Phase enthaltend Wachs, und
      iii) mindestens einen Emulgator,
      mit
   B) einem Demulgator mit mindestens einer funktionalen Gruppe.
2. Gebrochene Dispersion nach Satz 1, dadurch gekennzeichnet, dass die gebrochene Dispersion ein Reaktionsprodukt aus dem Demulgator und einem Bestandteil der wachshaltigen Dispersion A), insbesondere ein Reaktionsprodukt aus Demulgator und Emulgator, enthält.
3. Gebrochene Dispersion nach Satz 1 oder 2, dadurch gekennzeichnet, dass der Demulgator eine polyfunktionale Verbindung ist.
4. Gebrochene Dispersion nach Satz 3, dadurch gekennzeichnet, dass die polyfunktionale Verbindung ein Polyisocyanat, insbesondere ein polymeres Polyisocyanat, ist.
5. Gebrochene Dispersion nach Satz 4, dadurch gekennzeichnet, dass das Polyisocyanat ein polymeres Diphenylmethandiisocyanat ist.
6. Gebrochene Dispersion nach einem der voranstehenden Sätze 1-5, dadurch gekennzeichnet, dass das Wachs ausgewählt ist aus natürlichen Wachsen und/oder Paraffin, wobei das Paraffin insbesondere ausgewählt ist aus C₁₀ bis C₅₀-Alkanen und Paraffinwachs, und wobei das Paraffinwachs insbesondere ausgewählt sein kann aus der Gruppe bestehend aus erdölbasierten Paraffinwachsen, Weichwachsen, Fischer-Tropsch-Paraffinen sowie Mischungen und Raffinationsprodukten hiervon.
7. Gebrochene Dispersion nach einem der voranstehenden Sätze 1-6, dadurch gekennzeichnet, dass der Trockensubstanzgehalt der wachshaltigen Dispersion 10 bis 90 Gew.-%, bevorzugt 20 bis 80 Gew.-% und besonders bevorzugt 30 bis 70 Gew.-% beträgt, jeweils bezogen auf das Gesamtgewicht der wachshaltigen Dispersion.
8. Gebrochene Dispersion nach einem der voranstehenden Sätze 1-7, dadurch gekennzeichnet, dass die wachshaltige Dispersion
   - 10 bis 95 %, bevorzugt 15 bis 90 Gew.-%, C₁₀ bis C₅₀-Alkane und/oder
   - 1 bis 70 %, bevorzugt 2 bis 60 Gew.-%, Fettsäuren,
   jeweils bezogen auf die Gesamtmenge an Trockensubstanz in der wachshaltigen Dispersion, enthält.
9. Gebrochene Dispersion nach einem der voranstehenden Sätze 1-8, dadurch gekennzeichnet, dass die Menge an Demulgator 0,05 bis 1 Gew.-% (fest/fest), bevorzugt 0,08 bis 0,8 Gew.-% (fest/fest), und besonders bevorzugt 0,1 bis 0,5 Gew.-% (fest/fest), jeweils bezogen auf das Gesamtfeststoffgewicht der gebrochenen Dispersion, beträgt.
10. Verfahren zur Herstellung eines Holzwerkstoffs umfassend die Schritte:
   a) Bereitstellen von Holzpartikeln,
   b) Beleimen der Holzpartikel mit einem Bindemittel,
   c) Verpressen der beleimten Holzpartikel zu einem Holzwerkstoff,
   dadurch gekennzeichnet, dass vor, während oder nach Schritt b) die Holzpartikel und/oder das Bindemittel mit einer gebrochenen Dispersion gemäß einem der voranstehenden Sätze 1-7 in Berührung gebracht werden.
11. Verfahren nach Satz 10, dadurch gekennzeichnet, dass die gebrochene Dispersion in einer Menge von 0,1 bis 10 Gew.-% (fest/atro), bevorzugt von 0,3 bis 5 Gew.-% (fest/atro), und besonders bevorzugt von 0,5 bis 2,5 Gew.-% (fest/atro), jeweils bezogen auf das Gesamtgewicht der Holzpartikel (atro), eingesetzt wird.
12. Verfahren nach einem der Sätze 10 oder 11, dadurch gekennzeichnet, dass das Mischen von wachshaltiger Dispersion und Demulgator zur Herstellung der gebrochene Dispersion unmittelbar vor dem In-Berührung-Bringen mit den Holzpartikeln und/oder dem Bindemittel erfolgt, wobei "unmittelbar vor" einen Zeitraum von weniger als 5 Minuten, bevorzugt von weniger als 1 Minute und insbesondere bevorzugt von weniger als 10 Sekunden vor dem In-Berührung-Bringen bedeutet.
13. Verfahren nach einem der Sätze 10 bis 12, dadurch gekennzeichnet, dass das Mischen von wachshaltiger Dispersion und Demulgator zur Herstellung der gebrochene Dispersion
   - in einem getrennten Arbeitsschritt vor der Zugabe zu den Holzpartikeln und/oder dem Bindemittel erfolgt oder
   - durch gleichzeitige Zugabe von wachshaltiger Dispersion und Demulgator zu den Holzpartikeln und/oder dem Bindemittel erfolgt.
14. Verfahren nach einem der Sätze 10 bis 13, dadurch gekennzeichnet, dass die Holzpartikel ausgewählt sind aus Holzspänen, Holzfasern und Holzstrands.
15. Verfahren nach einem der Sätze 10 bis 14, dadurch gekennzeichnet, dass das Bindemittel ein aminoplastisches Bindemittel ist.
16. Holzwerkstoff erhältlich nach einem Verfahren gemäß einem der Sätze 10 bis 15.
17. Verwendung einer gebrochenen Dispersion nach einem der Sätze 1 bis 9 zur Hydrophobierung eines lignocellulosehaltigen Materials und/oder eines Bindemittels.

## Patentansprüche

1. Verfahren zur Herstellung eines Holzwerkstoffs umfassend die Schritte:
a) Bereitstellen von Holzpartikeln,
b) Beleimen der Holzpartikel mit einem Bindemittel,
c) Verpressen der beleimten Holzpartikel zu einem Holzwerkstoff,
**dadurch gekennzeichnet, dass** vor, während oder nach Schritt b) die Holzpartikel und/oder das Bindemittel mit einer gebrochenen Dispersion zur Hydrophobierung von lignocellulosehaltigem Material in Berührung gebracht werden, wobei die gebrochene Dispersion erhältlich ist durch Mischen von mindestens
A) einer wachshaltigen Dispersion enthaltend folgende Komponenten:
i) mindestens eine wässrige Phase als kontinuierliche Phase,
ii) mindestens eine disperse Phase enthaltend Wachs, und
iii) mindestens einen Emulgator,
mit
B) einem Demulgator mit mindestens einer funktionalen Gruppe.

2. Verwendung einer gebrochenen Dispersion zur Hydrophobierung eines lignocellulosehaltigen Materials und/oder eines Bindemittels, wobei die gebrochene Dispersion erhältlich ist durch Mischen von mindestens
A) einer wachshaltigen Dispersion enthaltend folgende Komponenten:
i) mindestens eine wässrige Phase als kontinuierliche Phase,
ii) mindestens eine disperse Phase enthaltend Wachs, und
iii) mindestens einen Emulgator,
mit
B) einem Demulgator mit mindestens einer funktionalen Gruppe.

3. Verfahren nach Anspruch 1 oder Verwendung nach Anspruch 2, **dadurch gekennzeichnet, dass** die gebrochene Dispersion ein Reaktionsprodukt aus dem Demulgator und einem Bestandteil der wachshaltigen Dispersion A), insbesondere ein Reaktionsprodukt aus Demulgator und Emulgator, enthält.

4. Verfahren oder Verwendung nach einem der Ansprüche 1 bis 3, **dadurch gekennzeichnet, dass** der Demulgator eine polyfunktionale Verbindung ist.

5. Verfahren oder Verwendung nach Anspruch 4, **dadurch gekennzeichnet, dass** die polyfunktionale Verbindung ein Polyisocyanat, insbesondere ein polymeres Polyisocyanat, ist.

6. Verfahren oder Verwendung nach Anspruch 5, **dadurch gekennzeichnet, dass** das Polyisocyanat ein polymeres Diphenylmethandiisocyanat ist.

7. Verfahren oder Verwendung nach einem der voranstehenden Ansprüche, **dadurch gekennzeichnet, dass** das Wachs ausgewählt ist aus natürlichen Wachsen und/oder Paraffin, wobei das Paraffin insbesondere ausgewählt ist aus C₁₀ bis C₅₀-Alkanen und Paraffinwachs, und wobei das Paraffinwachs insbesondere ausgewählt sein kann aus der Gruppe bestehend aus erdölbasierten Paraffinwachsen, Weichwachsen, Fischer-Tropsch-Paraffinen sowie Mischungen und Raffinationsprodukten hiervon.

8. Verfahren oder Verwendung nach einem der voranstehenden Ansprüche, **dadurch gekennzeichnet, dass** der Trockensubstanzgehalt der wachshaltigen Dispersion 10 bis 90 Gew.-%, bevorzugt 20 bis 80 Gew.-% und besonders bevorzugt 30 bis 70 Gew.-% beträgt, jeweils bezogen auf das Gesamtgewicht der wachshaltigen Dispersion.

9. Verfahren oder Verwendung nach einem der voranstehenden Ansprüche, **dadurch gekennzeichnet, dass** die wachshaltige Dispersion
- 10 bis 95 %, bevorzugt 15 bis 90 Gew.-%, C₁₀ bis Cso-Alkane und/oder
- 1 bis 70 %, bevorzugt 2 bis 60 Gew.-%, Fettsäuren,
jeweils bezogen auf die Gesamtmenge an Trockensubstanz in der wachshaltigen Dispersion, enthält.

10. Verfahren oder Verwendung nach einem der voranstehenden Ansprüche, **dadurch gekennzeichnet, dass** die Menge an Demulgator 0,05 bis 1 Gew.-% (fest/fest), bevorzugt 0,08 bis 0,8 Gew.-% (fest/fest), und besonders bevorzugt 0,1 bis 0,5 Gew.-% (fest/fest), jeweils bezogen auf das Gesamtfeststoffgewicht der gebrochenen Dispersion, beträgt.

11. Verfahren nach einem der Ansprüche 1 oder 3 bis 10, **dadurch gekennzeichnet, dass** die gebrochene Dispersion in einer Menge von 0,1 bis 10 Gew.-% (fest/atro), bevorzugt von 0,3 bis 5 Gew.-% (fest/atro), und besonders bevorzugt von 0,5 bis 2,5 Gew.-% (fest/atro), jeweils bezogen auf das Gesamtgewicht der Holzpartikel (atro), eingesetzt wird.

12. Verfahren nach einem der Ansprüche 1 oder 3 bis 11, **dadurch gekennzeichnet, dass** das Mischen von wachshaltiger Dispersion und Demulgator zur Herstellung der gebrochene Dispersion unmittelbar vor dem In-Berührung-Bringen mit den Holzpartikeln und/oder dem Bindemittel erfolgt, wobei "unmittelbar vor" einen Zeitraum von weniger als 5 Minuten, bevorzugt von weniger als 1 Minute und insbesondere bevorzugt von weniger als 10 Sekunden vor dem In-Berührung-Bringen bedeutet.

13. Verfahren nach einem der Ansprüche 1 oder 3 bis 12, **dadurch gekennzeichnet, dass** das Mischen von wachshaltiger Dispersion und Demulgator zur Herstellung der gebrochene Dispersion
- in einem getrennten Arbeitsschritt vor der Zugabe zu den Holzpartikeln und/oder dem Bindemittel erfolgt oder
- durch gleichzeitige Zugabe von wachshaltiger Dispersion und Demulgator zu den Holzpartikeln und/oder dem Bindemittel erfolgt.

14. Verfahren nach einem der Ansprüche 1 oder 3 bis 13, **dadurch gekennzeichnet, dass** die Holzpartikel ausgewählt sind aus Holzspänen, Holzfasern und Holzstrands.

15. Verfahren nach einem der Ansprüche 1 oder 3 bis 14, **dadurch gekennzeichnet, dass** das Bindemittel ein aminoplastisches Bindemittel ist.

16. Holzwerkstoff erhältlich nach einem Verfahren gemäß einem der Ansprüche 1 oder 3 bis 15.

17. Gebrochene Dispersion zur Hydrophobierung von lignocellulosehaltigem Material, wobei die gebrochene Dispersion erhältlich ist durch Mischen von mindestens
A) einer wachshaltigen Dispersion enthaltend folgende Komponenten:
i) mindestens eine wässrige Phase als kontinuierliche Phase,
ii) mindestens eine disperse Phase enthaltend Wachs, und
iii) mindestens einen Emulgator,
mit
B) einem Demulgator mit mindestens einer funktionalen Gruppe, wobei der Demulgator ein polymeres Diphenylmethandiisocyanat ist.

18. Verwendung eines polymeren Diphenylmethandiisocyanats als Demulgator zum Brechen einer wachshaltigen Dispersion, welche folgende Komponenten enthält:
i) mindestens eine wässrige Phase als kontinuierliche Phase,
ii) mindestens eine disperse Phase enthaltend Wachs, und
iii) mindestens einen Emulgator.

19. Zweikomponentensystem (Kit-of-parts) zur Hydrophobierung von lignocellulosehaltigem Material enthaltend mindestens zwei Komponenten A und B:
A) eine wachshaltige Dispersion enthaltend
i) mindestens eine wässrige Phase als kontinuierliche Phase,
ii) mindestens eine disperse Phase enthaltend Wachs, und
iii) mindestens einen Emulgator,
B) einen Demulgator mit mindestens einer funktionalen Gruppe zum Brechen der wachshaltigen Dispersion, wobei der Demulgator ein polymeres Diphenylmethandiisocyanat ist.

## Claims

1. Process for forming a wood-base product comprising the steps of
a) providing particles of wood,
b) resinating the particles of wood with a binder,
c) compressing the resinated particles of wood to form a wood-base product,
**characterized in that** before, during or after step b) the particles of wood and/or the binder are brought into contact with a broken dispersion for hydrophobicizing lignocellulose-containing material, wherein the broken dispersion is obtainable by mixing at least
A) a wax-containing dispersion containing the following components:
i) at least one aqueous phase as continuous phase,
ii) at least one disperse phase containing wax, and
iii) at least one emulsifier,
with
B) a demulsifier having at least one functional group.

2. Use of a broken dispersion for hydrophobicizing a lignocellulose-containing material and/or a binder, wherein the broken dispersion is obtainable by mixing at least
A) a wax-containing dispersion containing the following components:
i) at least one aqueous phase as continuous phase,
ii) at least one disperse phase containing wax, and
iii) at least one emulsifier,
with
B) a demulsifier having at least one functional group.

3. Process according to Claim 1 or use according to Claim 2, **characterized in that** the broken dispersion contains a reaction product formed from the demulsifier and a constituent of the wax-containing dispersion A), in particular a reaction product formed from demulsifier and emulsifier.

4. Process or use according to any of Claims 1 to 3, **characterized in that** the demulsifier is a polyfunctional compound.

5. Process or use according to Claim 4, **characterized in that** the polyfunctional compound is a polyisocyanate, in particular a polymeric polyisocyanate.

6. Process or use according to Claim 5, **characterized in that** the polyisocyanate is a polymeric diphenylmethane diisocyanate.

7. Process or use according to any preceding claim, **characterized in that** the wax is selected from natural waxes and/or paraffin, wherein the paraffin is particularly selected from C₁₀ to C₅₀ alkanes and paraffin wax, and wherein the paraffin wax may be particularly selected from the group consisting of petroleum-based paraffin waxes, soft waxes, Fischer-Tropsch paraffins and also mixtures and refinery products thereof.

8. Process or use according to any preceding claim, **characterized in that** the dry matter content of the wax-containing dispersion is from 10 to 90 wt%, preferably from 20 to 80 wt% and more preferably from 30 to 70 wt%, all based on the total weight of the wax-containing dispersion.

9. Process or use according to any preceding claim, **characterized in that** the wax-containing dispersion contains
- 10 to 95%, preferably 15 to 90 wt% of C₁₀ to C₅₀
alkanes and/or
- 1 to 70%, preferably 2 to 60 wt% of fatty acids, all based on the total amount of dry matter in the wax-containing dispersion.

10. Process or use according to any preceding claim, **characterized in that** the amount of demulsifier is from 0.05 to 1 wt% (solids/solids), preferably from 0.08 to 0.8 wt% (solids/solids) and more preferably from 0.1 to 0.5 wt% (solids/solids), all based on the total solids weight of the broken dispersion.

11. Process according to any of Claims 1 or 3 to 10, **characterized in that** the broken dispersion is employed in an amount of 0.1 to 10 wt% (solids/absolutely dry), preferably of 0.3 to 5 wt% (solids/absolutely dry) and more preferably of 0.5 to 2.5 wt% (solids/absolutely dry), all based on the total weight of the particles of wood (absolutely dry).

12. Process according to any of Claims 1 or 3 to 11, **characterized in that** the step of mixing the wax-containing dispersion and the demulsifier to form the broken dispersion is effected immediately before the step of bringing into contact with the particles of wood and/or with the binder, in which connection "immediately before" defines a period of less than 5 minutes, preferably of less than 1 minute and more preferably of less than 10 seconds before the step of bringing into contact.

13. Process according to any of Claims 1 or 3 to 12, **characterized in that** the step of mixing the wax-containing dispersion and the demulsifier to form the broken dispersion is effected
- in a separate operation prior to the step of admixing to the particles of wood and/or the binder, or
- by simultaneously admixing the wax-containing dispersion and the demulsifier to the particles of wood and/or the binder.

14. Process according to any of Claims 1 or 3 to 13, **characterized in that** the particles of wood are selected from wood shavings, wood fibers and wood strands.

15. Process according to any of Claims 1 or 3 to 14, **characterized in that** the binder is an aminoplastic binder.

16. Wood-base product obtainable by a process according to any of Claims 1 or 3 to 15.

17. Broken dispersion for hydrophobicizing lignocellulose-containing material, wherein the broken dispersion is obtainable by mixing at least mixed
A) a wax-containing dispersion containing the following components:
i) at least one aqueous phase as continuous phase,
ii) at least one disperse phase containing wax, and
iii) at least one emulsifier,
with
B) a demulsifier having at least one functional group, wherein the demulsifier is a polymeric diphenylmethane diisocyanate.

18. Use of a polymeric diphenylmethane diisocyanate as demulsifier for breaking a wax-containing dispersion containing the following components:
i) at least one aqueous phase as continuous phase,
ii) at least one disperse phase containing wax, and
iii) at least one emulsifier.

19. Two-component system (kit-of-parts) for hydrophobicizing lignocellulose-containing material containing at least two components A and B:
A) a wax-containing dispersion containing
i) at least one aqueous phase as continuous phase,
ii) at least one disperse phase containing wax, and
iii) at least one emulsifier,
B) a demulsifier having at least one functional group for breaking the wax-containing dispersion, wherein the demulsifier is a polymeric diphenylmethane diisocyanate.

## Revendications

1. Procédé de production d'un matériau à base de bois, comprenant les étapes de :
a) production de particules de bois,
b) encollage des particules de bois à l'aide d'un liant,
c) pressage des particules de bois encollées en un matériau à base de bois,
**caractérisé en ce qu'**avant ou après l'étape b), les particules de bois et/ou le liant sont mis en contact avec une dispersion cassée pour rendre hydrophobe le matériau lignocellulosique, où la dispersion cassée est obtenue par mélange d'au moins
A) une dispersion contenant une cire comprenant les composant suivants :
i) au moins une phase aqueuse comme phase continue,
ii) au moins une phase dispersée contenant une cire, et
iii) au moins un émulsifiant,
avec
B) un désémulsifiant ayant au moins un groupe fonctionnel.

2. Utilisation d'une dispersion cassée pour rendre hydrophobe un matériau lignocellulosique et/ou un liant, où la dispersion cassée est obtenue par mélange d'au moins
A) une dispersion contenant une cire comprenant les composant suivants :
i) au moins une phase aqueuse comme phase continue,
ii) au moins une phase dispersée contenant une cire, et
iii) au moins un émulsifiant,
avec
B) un désémulsifiant ayant au moins un groupe fonctionnel.

3. Procédé selon la revendication 1 ou utilisation selon la revendication 2, **caractérisé en ce que** la dispersion cassée contient le produit de réaction du désémulsifiant et d'un constituant de la dispersion contenant une cire A), en particulier le produit de réaction de désémulsifiant et de l'émulsifgiant.

4. Procédé ou utilisation selon l'une des revendications 1 à 3, **caractérisé en ce que** le désémulsifiant est un composé polyfonctionnel.

5. Procédé ou utilisation selon la revendication 4, **caractérisé en ce que** le composé polyfonctionnel est un polyisocyanate, en particulier un polyisocyanate polymérique.

6. Procédé ou utilisation selon la revendication 6, **caractérisé en ce que** le polyisocyanate est un diphénylméthanediisocyanate polymérique.

7. Procédé ou utilisation selon l'une des revendications précédentes, **caractérisé en ce que** la cire est choisie parmi les cires naturelles et/ou la paraffine, où la paraffine est choisie en particulier, parmi les alcanes en C₁₀ à C₅₀ et les cires de paraffine, et où la cire de paraffine peut être choisie en particulier parmi le groupe consistant en des cires de paraffine à base de pétrole, des cires molles, des paraffines de Fischer-Tropsch ainsi que leurs mélanges et produits de raffinage.

8. Procédé ou utilisation selon l'une des revendications précédentes, **caractérisé en ce que** la teneur en matières sèches de la dispersion contenant une cire se situe dans l'intervalle allant de 10 à 90% en poids, de préférence de 20 à 80% en poids et de manière particulièrement préférée, de 30 à 70% en poids, chaque fois sur base du poids total de la dispersion contenant une cire.

9. Procédé ou utilisation selon l'une des revendications précédentes, **caractérisé en ce que** la dispersion contenant une cire contient :
- 10 à 95%, de préférence 15 à 90% en poids d'alcanes en C₁₀ à C₅₀, et/ou
- 1 à 70%, de préférence 2 à 60% en poids d'acides gras,
chaque fois sur base de la quantité totale de matières sèches dans la dispersion contenant une cire.

10. Procédé ou utilisation selon l'une des revendications précédentes, **caractérisé en ce que** la quantité de désémulsifiant se situe dans l'intervalle allant de 0,05 à 1% en poids (solide/solide), de préférence 0,08 à 0,8% en poids (solide/solide), et de manière particulièrement préférée de 0,1 à 0,5% en poids (solide/solide), chaque fois sur base du poids total des matières sèches de la dispersion cassée.

11. Procédé selon l'une des revendications 1 ou 3 à 10, **caractérisé en ce que** la dispersion cassée est mise en oeuvre en une quantité allant de 0,1 à 10% en poids (solide/atro), de préférence 0,3 à 5% en poids (solide/atro), et de manière particulièrement préférée de 0,5 à 2,5% en poids (solide/atro), chaque fois sur base du poids total des particules de bois (atro).

12. Procédé selon l'une des revendications 1 ou 3 à 11, **caractérisé en ce que** le mélange de la dispersion contenant une cire et du désémulsifiant pour la préparation de la dispersion cassée se fait directement avant la mise en contact avec les particules de bois et/ou le liant, où « directement avant » signifie une durée de moins de 5 minutes, de préférence de moins de 1 minute, de manière particulièrement préférée de moins de 10 secondes avant la mise en contact.

13. Procédé selon l'une des revendications 1 ou 3 à 12, **caractérisé en ce que** le mélange de la dispersion contenant une cire et du désémulsifiant pour la préparation de la dispersion cassée
- est réalisée au cours d'une étape de travail distincte avant l'addition aux particules de bois et/ou au liant, ou
- est réalisation par addition simultanée de la dispersion contenant une cire et du désémulsifiant aux particules de bois et/ou au liant.

14. Procédé selon l'une des revendications 1 ou 3 à 13, **caractérisé en ce que** les particules de bois sont choisies parmi des copeaux de bois, des fibres de bois et des copeaux de bois longs.

15. Procédé selon l'une des revendications 1 ou 3 à 14, **caractérisé en ce que** le liant est un liant aminoplaste.

16. Matériau à base de bois obtenu par un procédé selon l'une des revendications 1 ou 3 à 15.

17. Dispersion cassée pour rendre hydrophobe un matériau lignocellulosique, où la dispersion cassée est obtenue par mélange d'au moins
A) une dispersion contenant une cire comprenant les composant suivants :
i) au moins une phase aqueuse comme phase continue,
ii) au moins une phase dispersée contenant une cire, et
iii) au moins un émulsifiant,
avec
B) un désémulsifiant ayant au moins un groupe fonctionnel, où le désémulsifiant est un diphénylméthanediisocyanate polymérique.

18. utilisation d'un diphénylméthanediisocyanate polymérique comme désémulsifiant pour casser une dispersion contenant une cire, laquelle dispersion comprend les composants suivants :
i) au moins une phase aqueuse comme phase continue,
ii) au moins une phase dispersée contenant une cire, et
iii) au moins un émulsifiant.

19. Système à deux composants pour rendre hydrophobe un matériau lignocellulosique, contenant au moins deux composants A et B :
A) une dispersion contenant une cire comprenant
i) au moins une phase aqueuse comme phase continue,
ii) au moins une phase dispersée contenant une cire, et
iii) au moins un émulsifiant,
B) un désémulsifiant ayant au moins un groupe fonctionnel pour casser la dispersion contenant une cire, où le désémulsifiant est un diphénylméthanediisocyanate polymérique.
